(19) Europäisches Patentamt
European Patent Office
Office européen des brevets

(11) **EP 2 376 784 B1**

(12) **EUROPÄISCHE PATENTSCHRIFT**

(45) Veröffentlichungstag und Bekanntmachung des Hinweises auf die Patenterteilung:
**21.03.2018 Patentblatt 2018/12**

(51) Int Cl.:
**F04C 28/02** $^{(2006.01)}$ **F04B 49/00** $^{(2006.01)}$

(21) Anmeldenummer: **09799640.9**

(22) Anmeldetag: **23.12.2009**

(86) Internationale Anmeldenummer:
**PCT/EP2009/067851**

(87) Internationale Veröffentlichungsnummer:
**WO 2010/072808 (01.07.2010 Gazette 2010/26)**

(54) **VERFAHREN ZUM STEUERN EINER KOMPRESSORANLAGE**

METHOD FOR CONTROLLING A COMPRESSOR INSTALLATION

PROCÉDÉ DE COMMANDE D'UNE INSTALLATION DE COMPRESSEURS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **23.12.2008 DE 102008064490**

(43) Veröffentlichungstag der Anmeldung:
**19.10.2011 Patentblatt 2011/42**

(60) Teilanmeldung:
**12198935.4 / 2 573 400**

(73) Patentinhaber: **KAESER KOMPRESSOREN SE 96450 Coburg (DE)**

(72) Erfinder: **OPPEL, Thomas 96479 Weitramsdorf (DE)**

(74) Vertreter: **Zech, Stefan Markus et al Meissner Bolte Patentanwälte Rechtsanwälte Partnerschaft mbB Postfach 86 06 24 81633 München (DE)**

(56) Entgegenhaltungen:
**EP-A1- 0 431 287   EP-A2- 1 906 024
WO-A1-03/095841   DE-A1- 3 500 636
US-A- 5 343 384   US-A- 5 967 761**

**EP 2 376 784 B1**

**Beschreibung**

Die Erfindung betrifft ein Verfahren zum Steuern einer Kompressoranlage, die eine Mehrzahl von Kompressoren, insbesondere unterschiedlicher Bauart und/oder Leistung umfasst. Gleichzeitig betrifft die Erfindung eine Steuerungseinrichtung für eine solche Kompressoranlage.

Eine Kompressoranlage mit einem Steuerungsverfahren ist aus den Druckschriften WO03/095841 A1 und EP O 431 287 A1 bekannt.

Kompressoranlagen, insbesondere für industrielle Anwendungen vorgesehene Kompressoranlagen bedürfen für die Bereitstellung von ausreichend Druckfluid typischerweise einer großen Anzahl an einzelnen Kompressoren zur Lieferung dieses Druckfluids. Um eine solche Kompressoranlage effizient zu betreiben, wird zunehmend die Wirtschaftlichkeit der einzelnen Komponenten sowie der gesamten Kompressoranlage nicht nur bei der Konzeption und Planung der Kompressoranlage berücksichtigt, sondern auch bei deren Betrieb. Diese die Wirtschaftlichkeit der Kompressoranlage betreffenden Gesichtspunkte werden typischerweise neben ebenfalls einzuhaltenden Umweltbestimmungen oder Qualitätsanforderungen berücksichtigt. Der Energieverbrauch einer Kompressoranlage kann hierbei bis zu 80% der Gesamtkosten für den Betrieb ausmachen, weshalb der Energiebedarf als der Hauptkostenfaktor für einen Betreiber einer Kompressoranlage zählt.

Um die Energieeinsparpotenziale einer Kompressoranlage zu nutzen, wurde neben Maßnahmen etwa betreffend die Wärmerückgewinnung oder die Verminderung von Leckagen auch erkannt, dass durch den Einsatz von geeigneten Steuer- und Regelsystemen die Betriebskosten einer Kompressoranlage signifikant vermindert werden können. Eine Steuerung bzw. Regelung der Kompressoranlage ermöglicht etwa die geeignete Aufteilung von Betriebszeiten verschiedener Kompressoren und reduziert folglich das Risiko eines Ausfalles bzw. erleichtert die Wartung der Kompressoranlage. Bei Ausfall eines Kompressors können beispielsweise weitere sich im Leerlauf bzw. im Stillstand befindliche Kompressoren von der Steuerung bzw. Regelung angesprochen und zur Bereitstellung von Druckfluid veranlasst werden, um das Absinken des Betriebsdrucks der Kompressoranlage bzw. deren Stillstand zu verhindern.

Im einfachsten Fall werden zur Steuerung von mehrere Kompressoren umfassenden Kompressoranlagen Kaskaden- bzw. Druckbandregelungen eingesetzt, welche entscheiden, welcher Kompressor der Kompressoranlage bei vorbestimmten Betriebsbedingungen jeweils zu- bzw. abgeschaltet wird. Bei der Kaskadenregelung wird jedem Kompressor ein bestimmter Druckbereich zugewiesen, gemäß dessen die Zu- bzw. Abschaltung eines jeweiligen Kompressors von der Steuerung bestimmt wird. Mittels dieser Definition einzelner den Kompressoren zugewiesener Druckbereiche, auch Druckbänder genannt, kann durch Zuschalten einer größeren Anzahl von Kompressoren bzw. durch Zuschalten von Kompressoren mit einer im Vergleich zu den anderen erhöhten Liefermenge an Druckfluid auch bei hohen Druckfluidentnahmeraten die nachgefragte Menge an Druckfluid gedeckt werden. Nachteilig an solchen Regelungen ist jedoch, dass typischerweise keine Rücksicht auf einen aktuellen Druckfluidverbrauch bzw. die Veränderung der aktuellen Druckfluidentnahme genommen wird.

Weiterentwickelte Druckbandsteuerungen nutzen die Möglichkeit, eine beliebige Anzahl an Kompressoren über ein einziges Druckband zu steuern. Durch ein solches Steuerungsverfahren kann einerseits die Reduzierung des maximal in der Kompressoranlage vorherrschenden Druckes an Druckfluid erreicht werden, und auch gleichzeitig manche energetische Verluste in der Kompressoranlage verringert werden.

Dennoch hat sich gezeigt, dass Druckbandregelungen bei einer typischen Abstufung einzelner Kompressoren zueinander bei schwankender Entnahme von Druckfluid aus der Kompressoranlage nicht geeignet sind, eine Kompressoranlage so zu steuern, dass die Druckfluidnachfrage einerseits ausreichend und andererseits in energetisch effizienter Weise gedeckt werden kann. Beispielsweise können Betriebszustände bzw. - konstellationen in der Kompressoranlage auftreten, welche entweder zu einer nicht ausreichenden Bereitstellung von Druckfluid oder einer energetisch äußerst ineffizienten Bereitstellung von Druckfluid führen. Gemäß dieser aus dem Stande der Technik bekannten Nachteile stellt sich folglich die Aufgabe, ein verbessertes Verfahren zum Steuern einer Kompressoranlage vorzuschlagen, welches auch bei schwankender Entnahme von Druckfluid aus der Kompressoranlage eine ausreichende Versorgung mit Druckfluid ermöglicht, wobei gleichzeitig die von der Steuerung veranlassten Schalthandlungen möglichst wirtschaftlich erfolgen sollen.

Erfindungsgemäß wird diese Aufgabe durch ein Verfahren zum Steuern einer Kompressoranlage, die eine Mehrzahl von Kompressoren, insbesondere unterschiedlicher Bauart und/oder Leistung, umfasst gemäß Patentanspruch 1 gelöst. Überdies wird die Aufgabe durch eine Steuerungseinrichtung für eine solche Kompressoranlage gemäß Patentanspruch 15 gelöst.

Insbesondere wird die der Erfindung zugrundeliegende Aufgabe durch ein Verfahren zum Steuern einer Kompressoranlage gelöst, die eine Mehrzahl von Kompressoren, insbesondere unterschiedlicher Bauart und/oder Leistung, umfasst, wobei durch die Kompressoranlage in einem Druckfluidsystem trotz ggf. auch schwankender Entnahme von Druckfluid aus dem Druckfluidsystem ein vorbestimmter Überdruck aufrechterhalten werden soll, wobei in festen oder variablen Zeitabständen Entscheidungen über Schalthandlungen zur Adaption des Systems an aktuelle Bedingungen getroffen werden, wobei in einem Vorselektionsschritt unter Berücksichtigung der aktuellen Bedingungen, Schaltalternativen aus der Vielzahl von kombinatorisch zur Verfügung stehenden Schaltalternativen ausgeschlossen werden, wobei in einem Hauptselektionsschritt verbleibende Schaltalternativen unter Heranziehung einer oder mehrerer Optimierungskriterien gegeneinander abgewogen werden und die unter den vorgegebenen Kriterien optimale Schaltalternative ausgewählt wird und wobei in einem Steuerschritt die ausgewählte Schaltalternative zur Umsetzung in der Kompressoranlage ausgegeben wird.

In einer vorteilhaften Weiterbildung kann vorgesehen sein, dass von der Steuerung der Anlage bei Erreichung eines möglicherweise variablen Zuschaltdruckes Maßnahmen zur Erhöhung der Erzeugung von komprimiertem Druckfluid und bei Erreichen eines Abschaltdruckes Maßnahmen zur Reduzierung der Erzeugung von komprimiertem Druckfluid getroffen werden, wobei der Abschaltdruck variabel ist und in Abhängigkeit der aktuellen Konfiguration der Kompressoranlage und/oder unter Berücksichtigung einer festgelegten Schalthandlung (einer festgelegten Veränderung der Konfiguration der Kompressoranlage) veränderlich ist.

Hier und im Folgenden soll die Aufrechterhaltung eines vorbestimmten Überdruckes derart erfolgen, dass ein vorbestimmter, durch den realen Druckverlauf zu erreichender Adaptionsdruck durch den realen Druckverlauf nicht oder nur unwesentlich und/oder kurz unterschritten wird, sowie optional eine obere Druckgrenze nicht oder nur unwesentlich und/oder kurz überschritten wird.

Zudem wird die Erfindungsaufgabe gelöst durch eine Steuerungseinrichtung für eine Kompressoranlage, die eine Mehrzahl von Kompressoren, insbesondere unterschiedlicher Bauart und/oder Leistung umfasst, wobei durch die Kompressoranlage in einem Druckfluidsystem trotz gegebenenfalls auch schwankender Entnahme von Druckfluid aus dem Druckfluidsystem ein vorbestimmter Überdruck aufrechterhalten werden soll, wobei in festen oder variablen Zeitabständen Entscheidungen über Schalthandlungen zur Adaption des Systems an aktuelle Bedingungen getroffen werden und wobei die Steuerungseinrichtung umfasst: eine Ausschlusseinrichtung, die unter Berücksichtigung der aktuellen Bedingungen, Schaltalternativen aus der Vielzahl von kombinatorisch zur Verfügung stehenden Schaltalternativen ausschließt, eine Auswahleinrichtung, die verbleibende Schaltalternativen unter Heranziehung einer oder mehrerer Optimierungskriterien gegeneinander abwägt und unter den vorgegebenen Kriterien eine optimale Schaltalternative auswählt, sowie eine Ausgabeeinrichtung, die zur Ausgabe der ausgewählten Schaltalternative zur Umsetzung in der Kompressoranlage ausgebildet ist.

Die Steuerungseinrichtung kann in einer bevorzugten Ausgestaltung weiterhin umfassen: Eine Abschaltdruckermittlungseinrichtung, welche bei einer Überproduktion von Druckfluid einen Abschaltdruck in Abhängigkeit der aktuellen Konfiguration der Kompressoranlage und/oder unter Berücksichtigung einer festgelegten Schalthandlung (einer festgelegten Veränderung der Konfiguration der Kompressoranlage) ermittelt.

Hier und im Folgenden soll der Begriff Steuerung auch im Sinne einer Regelung verstanden werden. Da das Verfahren zur Steuerung einer Kompressoranlage sowie die einzelnen Ausführungsformen des Verfahrens sowohl steuerungsspezifische wie auch regelungsspezifische Merkmale aufweisen können, wurde vorliegend auf eine stringente Unterscheidung beider Begriffe zu Gunsten einer verständlichen Lesbarkeit verzichtet.

Ein Kerngedanke der vorliegenden Erfindung besteht darin, dass vor der Umsetzung einer Schalthandlung zur Adaption des Druckfluidsystems an aktuelle Bedingungen jeweils eine Vielzahl von möglichen Schaltalternativen berücksichtigt wird, welche unter Heranziehung eines oder mehrerer Optimierungskriterien gegeneinander abgewogen werden, um eine möglichst optimale Schaltalternative zur Umsetzung auswählen zu können. Hierbei können aufgrund der Verwendung eines Vorselektionsschrittes zahlreiche mögliche Schaltalternativen vor Ausführen des Hauptselektionsschrittes ausgeschlossen werden, wodurch nachfolgend nurmehr eine kleinere Anzahl an möglichen Schaltalternativen gegeneinander verglichen werden müssen. Diese Trennung von unterschiedlichen Selektionsschritten, erlaubt eine relativ rasche Auswahl einer möglichst optimalen Schaltalternative, welche dann in einem Steuerschritt über einen Schaltbefehl zur Umsetzung in der Kompressoranlage ausgegeben wird.

Folglich können Schalthandlungen in zeitlich kürzeren und aufeinanderfolgenden Zeitintervallen vorgenommen werden, wodurch eine verbesserte Adaption des Druckfluidsystems an aktuelle Bedingungen der Kompressoranlage erreicht werden kann. In weiterer Folge steigt die Wirtschaftlichkeit des Einsatzes der Kompressoren. Kommt es beispielsweise zu einer starken Entnahme von Druckfluid aus dem Druckfluidsystem, ist es der Steuerung der Kompressoranlage möglich, durch Vornahme des Vorselektionsschrittes unnötig aufwändige Abwägungen durch Vergleich einer relativ großen Anzahl an möglichen Schaltalternativen unter Heranziehung eines oder mehrerer Optimierungskriterien gegeneinander zu vermeiden, und die Abwägung auf eine geringere Anzahl an möglichen und geeigneten Schaltalternativen zu begrenzen. Folglich ist es der vorliegenden Steuerung möglich, sehr kurzfristig mit einer dennoch geeigneten und möglichst optimalen Schaltalternative auf eine hohe Entnahme von Druckfluid aus dem Druckfluidsystem zu reagieren.

Ein weiterer Kerngedanke einer bevorzugten Weiterbildung der vorliegenden Erfindung liegt darin, dass die Steuerung der Kompressoranlage bei Erreichen eines Abschaltdruckes Maßnahmen zur Reduzierung der Erzeugung von komprimiertem Druckfluid trifft, wobei der Abschaltdruck variabel ist. Demgemäß unterscheidet sich die derart weitergebildete Steuerung von einer typischen aus dem Stande der Technik bekannten Druckbandsteuerung, in der Schalthandlungen in der Regel bei Erreichen fest vorbestimmter Druckwerte ausgelöst werden. Die variable Gestaltung des Abschaltdruckes erlaubt eine geeignete Anpassung einer Stellhandlung an die aktuelle Konfiguration der Kompressoranlage bzw. kann auch festgelegte Stellhandlungen, gemäß einer festgelegten Veränderung der Konfiguration der Kompressoranlage berücksichtigen.

Wesentliche Gründe für die Ineffizienz der Benutzung einer Kompressoranlage bei Verwendung einer typischen Druckbandsteuerung können darin bestehen, dass einerseits ein zu groß vorgegebenes Druckband zeitweise zu unnötig hohen Drücken im Druckfluidsystem führt, wodurch die sich in Last befindenden Kompressoren unnötige Arbeit verrichten müssen. Andererseits kann ein zu klein vorgegebenes Druckband zu unnötig häufigen Schalthandlungen der Kompressoren führen, wodurch in erheblichem Umfang unnötige, mit diesen Schalthandlungen verbundene Arbeit anfallen kann.

Vorangehend und im Folgenden soll unter einem Zuschaltdruck ein virtueller Druckwert verstanden werden, bei dessen Erreichen Schalthandlungen von der Steuerung der Kompressoranlage zur Umsetzung veranlasst werden, die einem Absinken des in dem Druckfluidsystem vorherrschenden Überdruckes entgegenwirken. Der Zuschaltdruck liegt folglich unter dem Abschaltdruck, welcher ebenso als virtueller Druckwert definiert ist, bei dessen Erreichen bei steigendem realen Druckverlauf ebenfalls Schalthandlungen in der Kompressoranlage veranlasst werden, die ein Abschalten von Kompressoren zur Folge haben. Ein Zuschalten wie auch ein Abschalten von Kompressoren kann hierbei nicht nur ein Zu- oder Abschalten der gesamten Kompressoreinheit in einen Lastlauf oder Leerlauf bzw. Stillstand umfassen, sondern auch ein graduelles Ändern der Fördermenge zu größeren oder kleineren Werten.

Gemäß der in der Kompressoranlage umgesetzten Schaltalternative ergibt sich ein sich verändernder Verlauf des in der Kompressoranlage vorherrschenden Druckes (Überdruckes). Dieser Druckverlauf, welcher eine real messbare Größe darstellt, weist im Laufe seines Zeitverlaufes lokale Minimal- und lokale Maximalwerte auf, die sich aufgrund der Entnahme von Druckfluid aus dem Druckfluidsystem, bzw. der Bereitstellung von Druckfluid durch die jeweiligen Kompressoren ergibt. Typische bei Überschreiten des Abschaltdruckes auszuführende Schalthandlungen sind das Schalten eines Kompressors oder einer Kompressorgruppe aus Last in einen Leerlauf bzw. Stillstand oder auch die Verminderung der Laufleistung von lastlaufenden Kompressoren oder Kompressorengruppen. Typische Schalthandlungen, welche bei Unterschreiten des im Vergleich zum Abschaltdruck niedrigeren Zuschaltdruckes in der Kompressoranlage umzusetzen sind, sind die Lastschaltung eines sich in Stillstand oder Leerlauf befindenden Kompressors oder auch die Erhöhung der Laufleistung von lastlaufenden Kompressoren oder Kompressorengruppen, um die vermehrte Förderung von Druckfluid zu erreichen.

Aufgrund der technischen Baueigenschaften von Kompressoren werden Schalthandlungen bei Überschreitung des Abschaltdruckes im Wesentlichen sofort umgesetzt. Schalthandlungen, welche bei einem in der Kompressoranlage abnehmenden und den Zuschaltdruck unterschreitenden Überdruck vorgenommen werden, werden jedoch typischerweise erst mit einer gewissen zeitlichen Verzögerung (Totzeit) umgesetzt, da etwa ein Anlaufen eines Kompressors aus dem Stillstand bzw. Leerlauf auf die gewünschte Betriebsdrehzahl eines technisch notwendigen Vorlaufes bedarf. Demgemäß sind derartige Vorlaufzeiten beim Abschalten eines Kompressors im Vergleich zu einem Zuschalten eines Kompressors geringer, jedoch führen beide Schalthandlungen zu einem typischerweise zeitlich versetzten Umsetzen der veranlassten Schalthandlungen.

Demgemäß ist der virtuelle Abschaltdruck in der Praxis im Wesentlichen identisch mit einem zu erreichenden lokalen Maximalwert des realen Druckverlaufs. Ausnahmen im Falle sehr rascher Verminderungen des Druckfluidbedarfs und/oder bei fehlerhafter Auswahl zu kleiner außer Last zu schaltender Kompressoren sind zwar möglich, doch in der Praxis nur selten anzutreffen. Im Gegensatz hierzu liegt der virtuelle Zuschaltdruck in der Regel deutlich über dem zu erreichenden virtuellen Adaptionsdruck, welchem der Minimalwert des realen Druckverlaufs entsprechen soll, da bei Unterschreiten des Zuschaltdruckes zwar die Umsetzung von Zuschalthandlungen veranlasst wird, diese jedoch aufgrund der den Kompressoren immanenten Verzögerungszeiten nur zeitversetzt mit der vollen Druckfluidförderung beginnen können.

Ein Ziel des nach einer bevorzugten Ausgestaltung weitergebildeten Verfahrens zur Steuerung einer Kompressoranlage liegt nun darin, den Zuschaltdruck so zu bestimmten, dass die Minimalwerte des realen Druckverlaufs den Adaptionsdruck möglichst genau erreichen, diesen aber nicht unterschreiten. In anderen Worten ist der Adaptionsdruck ein virtueller Druckwert, welchen die Minimalwerte des realen Druckverlaufs möglichst genau erreichen sollen. Der Adaptionsdruck ist damit ein Vorgabewert für einen möglichst nicht zu unterschreitenden realen Druckwert, welcher in einer möglichen Ausführungsform variabel in Abhängigkeit des aktuellen Betriebszustandes der Kompressoranlage ermittelt werden kann.

Zur Einhaltung der Druckfestigkeitsgrenzen der Komponenten im Druckfluidsystems ist es typischerweise auch notwendig, dass eine obere Druckgrenze durch den realen Druckverlauf möglichst nicht überschritten wird. Folglich werden spätestens bei Erreichen der oberen Druckgrenze in der Kompressoranlage geeignete Schalthandlungen ausgelöst, etwa das Abschalten von sich in Last befindlichen Kompressoren, so dass der reale Druckverlauf möglichst die obere Druckgrenze nicht überschreitet. In der Praxis kann die obere Druckgrenze in aller Regel so hoch festgelegt werden, dass sie über den fallweise aufgrund von Kriterien zur Minimierung des Energieverbrauchs bestimmten Abschaltdrücken liegt, so dass sich die Abschaltdrücke und die weitgehend damit übereinstimmenden Maximalwerte des realen Druckverlaufs, ohne Beeinflussung durch die obere Druckgrenze und somit innerhalb des Druckspielraums zwischen Adaptionsdruck und oberer Druckgrenze vorwiegend oder ausschließlich aus energetischen Gesichtspunkten ergeben.

Wird nun der virtuelle Zuschaltdruck für einzelne Schalthandlungen fallweise so ermittelt, dass der reale Druckverlauf den Adaptionsdruck bei sinkendem Druckverlauf möglichst genau erreicht, so hat dies positive Auswirkungen auf den Energieverbrauch der gesamten Kompressoranlage, weil eine unnötige Erhöhung des Druckniveaus durch zeitlich zu frühes Zuschalten von Kompressoren vermieden wird und eine unnötige Arbeitsleitung nicht erfolgt.

An dieser Stelle soll auch darauf hingewiesen werden, dass die Bestimmung des variablen, virtuellen Zuschaltdruckes durch die Steuerung der Kompressoranlage so erfolgt, dass die Minimalwerte des realen Druckverlaufs den vorgegebenen Adaptionsdruck möglichst genau erreichen, aber nicht oder nur unwesentlich und/oder kurz unterschreiten. Hierzu wird der Zuschaltdruck so bestimmt, dass eine Zuschaltreaktionszeit eines in Last zu schaltenden Kompressors bzw. einer in Last zu schaltenden Kompressorgruppe einem prognostizierten Druckverlauf folgt. Die Ermittlung des Zuschaltdruckes bzw. des Abschaltdruckes durch die Steuerung der Kompressoranlage kann auch durch eine Steuerung der Kompressoranlage auf einer Zeitbasis anstelle einer Druckbasis erfolgen, wobei die Ermittlung des Zuschaltdruckes bzw. des Abschaltdruckes durch eine geeignete Ermittlung eines Zuschaltzeitpunktes bzw. Abschaltzeitpunktes ersetzt wird. Eine Steuerung auf Grundlage einer Zeitbasis ist folglich gleichwertig zur vorliegenden Steuerung auf Grundlage einer Druckbasis. Die Ermittlung eines Zuschaltzeitpunktes wird, wie die Ermittlung eines Zuschaltdruckes (analoges gilt für einen Abschaltzeitpunkt bzw. einen Abschaltdruck), jeweils fallweise für zukünftige Schalthandlungen ausgeführt.

Weiterhin soll darauf hingewiesen werden, dass das zur Bereitstellung eines vorbestimmten Überdruckes in einem Druckfluidsystem vorgesehene Verfahren analog auch in einem Vakuumsystem eingesetzt werden kann, in welchem ein nicht zu überschreitender Unterdruck aufrechterhalten werden soll, der Benutzern zur Verfügung gestellt wird. Ein Zuschalten einer von einer entsprechenden Anlage umfassten Pumpe hätte folglich eine Druckerniedrigung des Druckfluids in der Anlage zur Folge, und ein Abschalten einer Pumpe bzw. einer Pumpengruppe hätte demgemäß eine Erhöhung des Druckes in dem Druckfluidsystem zur Folge, falls eine Vakuumentnahme erfolgt bzw. sich das Vakuum, z. B. aufgrund von Lecks, verschlechtert. Eine Übertragung des vorliegenden Verfahrens zum Steuern einer Anlage zur Aufrechterhaltung eines vorbestimmten Überdruckes auf ein Verfahren zum Steuern einer Kompressor- bzw. Pumpenanlage, in welcher ein vorbestimmter Unterdruck nicht überschritten werden soll, ist nach fachmännischem Verständnis analog realisierbar.

In einer bevorzugten Ausführungsform des Verfahrens zum Steuern einer Kompressoranlage ist vorgesehen, dass die Steuerung der Anlage bei Erreichen eines möglicherweise variablen Zuschaltdruckes Maßnahmen zur Erhöhung der Erzeugung von komprimiertem Druckfluid und bei Erreichung eines möglicherweise variablen Abschaltdruckes Maßnahmen zur Reduzierung der Erzeugung von komprimierten Druckfluid trifft.

In einer weiteren bevorzugten Ausführungsform des Verfahrens zum Steuern einer Kompressoranlage ist vorgesehen, dass der Abschaltdruck in einer Energieoptimierung fallweise ermittelt, insbesondere errechnet wird. Demgemäß werden die Kompressoranlagen vorrangig mit dem Ziel gesteuert, den Energiebedarf zu optimieren, das heißt zu minimieren, wobei gleichzeitig ein vorbestimmter Überdruck (Adaptionsdruck) in der Kompressoranlage aufrecht erhalten wird d.h. vorzugsweise nicht oder nur unwesentlich und/oder kurz unterschritten wird. Eine Optimierung bzw. Minimierung ist im Folgenden lediglich als Optimierung bzw. Minimierung im Rahmen der möglichen Schaltalternativen zu verstehen. Aufgrund dieser Energiebedarfsminimierung unterscheidet sich das vorliegende Verfahren deutlich von herkömmlichen Druckbandsteuerungsverfahren, welche als wichtigste Regelgröße den Druck in dem Druckfluidsystem und nicht den Energiebedarf der Kompressoranlage steuern. Aufgrund der Ausnutzung der technischen Freiheitsgrade, welche durch die Auswahl einer geeigneten Schaltalternative aus einer Vielzahl von unterschiedlichen Schaltalternativen zur Verfügung gestellt werden, kann eine zielgerichtete Energieeinsparung erfolgen. Hierbei kann insbesondere der variable Zuschaltdruck derart bestimmt sein, dass bei Unterschreitung des Zuschaltdruckes durch den realen Druckverlauf der virtuelle Adaptionsdruck im Umkehrpunkt des realen Druckverlaufes mit dem Minimalwerten des realen Druckes möglichst genau übereinstimmt. Durch eine solche Optimierung wird einerseits erlaubt, das angestrebte Druckniveau einzuhalten, andererseits kann die Anzahl an notwendigen Schalthandlungen klein gehalten werden, woraus ein sehr wirtschaftlicher Betrieb resultiert.

In einer weiteren Ausführungsform des erfindungsgemäßen Verfahrens wird der optimale Abschaltdruck durch rechnerische Minimierung des Quotienten aus der Gesamtverlustarbeit in einem vordefinierten, eine Schaltalternative betreffenden periodischen Zeitintervall bestimmt und dem Zeitintervall selbst. Hierbei umfasst die Gesamtverlustarbeit die Summe der Verlustarbeit aller lastlaufenden Kompressoren in dem Zeitintervall, der Leerlaufverlustarbeit aller zuzuschaltenden Kompressoren in dem Zeitintervall und der Schaltverlustarbeit aller zu- und abzuschaltenden Kompressoren in dem Zeitintervall. Das periodische Zeitintervall basiert hierbei auf der Betrachtung sogenannter Schaltspiele. Derartige (virtuelle) Schaltspiele sind sich in dem Zeitintervall (Schaltspieldauer) gleichartig (periodisch) wiederholende Zeit-Druck-Verläufe ansteigend von einem minimalen zu einem maximalen und wieder abfallend zu einem minimalen Druckwert, die sich bei zeitweise, d.h. zumindest für die Schaltspieldauer, im Wesentlichen konstanter Druckfluidentnahme ergeben würden. Zur vereinfachenden Berechnung kann angenommen werden, dass die Druckfluidentnahme aus dem Druckfluidsystem so erfolgt, dass der reale Druckverlauf zwischen dem minimalen und dem maximalen Druckwert jeweils als linearer angenommen bzw. durch Geraden angenähert werden kann. Der oder die bei Erreichen des Zuschaltdruckes in Last bzw. bei Erreichen des Abschaltdruckes aus Last zu schaltende Kompressoren werden als bekannt vorausgesetzt und können auch vorab anhand geeigneter Heuristiken ausgewählt werden. Weiterhin wird typischerweise auch angenommen, dass die Betriebszustände der übrigen Kompressoren lediglich durch den Verlauf des realen Druckes beeinflusst werden und ansonsten unverändert bleiben.

Ein Schaltspiel betrifft nun eine Periodenlänge des realen, ebenfalls periodischen Druckverlaufes. Unter Voraussetzung der vereinfachenden Annahmen kann in einem geschlossenen mathematischen Ausdruck der mittlere Leistungsbedarf aller von der Kompressoranlage umfassten Kompressoren während eines Schaltspiels, das heißt während des vorab beschriebenen periodischen Zeitintervalls minimiert werden. Hierbei bedarf es jedoch nicht der Betrachtung des gesamten mittleren Leistungsbedarfs aller Kompressoren, sondern es kann vereinfachend eine geeignet definierte Gesamtverlustleistung $P_v$ angenommen werden, welche stellvertretend behandelt wird. Diese Verlustleistung kann im einfachsten Fall als Quotient aus der vorab beschriebenen Gesamtverlustarbeit sowie der Länge des periodischen Zeitintervalls eines Schaltspiels berechnet werden. Die so definierte Gesamtverlustleistung ist eine innerhalb eines Schaltspiels zeitlich gemittelte Verlustleistung. Wie weiter unten noch im Einzelnen ausgeführt werden wird, kann durch einfache mathematische Manipulation eine optimierte Schaltspieldruckdifferenz berechnet werden, welche aus einfach zu bestimmenden Größen abgeleitet werden kann. Die Schaltspieldruckdifferenz definiert sich aus der Differenz von Abschaltdruck und Adaptionsdruck.

Versuche haben gezeigt, dass Steuerungs- bzw. Regelungsverfahren, welche eine Optimierung der Schaltspieldruckdifferenz als Optimierungskriterium heranziehen, nennenswerte Erfolge in der Reduzierung des Energieverbrauchs der Kompressoranlage erzielt haben.

In einer Weiterführung des erfindungsgemäßen Verfahrens kann zudem vorgesehen sein, dass in die Berechnung des Abschaltdruckes folgende Größen eingehen: Energiebedarf der lastlaufenden Kompressoren, insbesondere bei Förderung gegen einen stetig zunehmenden Druck und/oder Leerlaufverluste der in Leerlauf bzw. Stillstand zu schaltenden Kompressoren und/oder Leerlaufverluste der in Leerlauf befindlichen Kompressoren und/oder Schaltverlustenergie der pro Schaltalternative zu schaltenden Kompressoren. Hierbei können die betreffenden Größen gemäß bekannter Heuristiken erstellt werden, oder aber in geeigneten Versuchen bzw. mit Hilfe geeigneter Berechnungsverfahren bestimmt werden. Insbesondere können sie auch das zeitliche Verhalten der einzelnen Kompressoren in Form von zeitlichen Verlaufskurven für alle Last, Leerlauf oder Schaltzustände in quantitativer Form umfassen, wobei die zeitliche Verzögerung zwischen einem Schaltzeitpunkt und der vollständigen Umsetzung einer Schalthandlung explizit mit berücksichtigt sein kann. Die Verzögerungszeiten können somit auch als Berechnungsgröße mit in die Bestimmung eines geeigneten Zuschaltdruckes bzw. Abschaltdruckes eingehen.

Ausführungsgemäß ist es auch möglich, dass der Zuschaltdruck in dem Verfahren zum Steuern einer Kompressoranlage so berechnet wird, dass der reale Druckverlauf einen berechneten, zu erreichenden Adaptionsdruck, welcher unter dem Zuschaltdruck liegt, möglichst genau, vorzugsweise mit weniger als 5%, weiter vorzugsweise mit weniger als 2% Abweichung erreicht, und weiter vorzugsweise nicht oder nur unwesentlich und/oder kurz unterschreitet. Dementsprechend kann die Aufrechterhaltung eines vorbestimmten Überdruckes in der Kompressoranlage gewährleistet werden, wobei gleichzeitig eine wirtschaftliche und effiziente Steuerung der Kompressoranlage erfolgt.

In einer weiteren Ausführungsform des erfindungsgemäßen Verfahrens ist vorgesehen, dass Schaltalternativen zur Reduzierung der Erzeugung von Druckfluid nach anderen Optimierungskriterien bewertet werden als Schaltalternativen zur Erhöhung der Erzeugung von Druckfluid. Demgemäß kann eine weiter differenzierte Anpassung des ausführungsgemäßen Verfahrens erfolgen, wodurch etwa erreicht werden kann, dass der reale Druckverlauf in seinen Umkehrpunkten, das heißt seinen minimalen und maximalen Druckwerten, während einer Schaltspieldauer den vorbestimmten Adaptionsdruck und den vorwiegend nach Kriterien der Energieverbrauchsoptimierung fallweise berechneten bzw. bestimmten Abschaltdruck möglichst genau erreicht.

In einer weiterführenden Ausführungsform des erfindungsgemäßen Verfahrens zur Steuerung einer Kompressoranlage werden Abwägung und Auswahl von Schaltalternativen zur Reduzierung der Erzeugung von Druckfluid unter Optimierungskriterien getroffen, die vorrangig oder ausschließlich den jeweiligen Gesamtenergieaufwand der in Betracht gezogenen verschiedenen Schaltalternativen berücksichtigen.

In einer weiterführenden Ausführungsform geht bei der Berücksichtigung des Gesamtenergieaufwandes verschiedener Schaltalternativen mindestens ein: Energiebedarf der lastlaufenden Kompressoren und/oder Leerlaufverluste der in Leerlauf bzw. Stillstand zu schaltenden Kompressoren und/oder Leerlaufverluste der in Leerlauf befindlichen Kompressoren und/oder Schaltverlustenergie der pro Schaltalternative zu schaltenden Kompressoren. Da der Gesamtenergieaufwand fallweise über alle Zeitperioden der Nutzung der Kompressoranlage optimiert berechnet wird und direkt in die Auswahl einer geeigneten Schaltalternative fließt, wird eine besonders energieeffiziente Steuerung der Kompressoranlage erreicht.

Ausführungsgemäß kann die Beurteilung und Auswahl der Schaltalternative in Echtzeit erfolgen. Unter Echtzeit wird hier und im Folgenden ein Zeitmaß verstanden, welches erheblich kürzer als die zeitliche Abfolge zweier umzusetzender Schaltalternativen ist. Demgemäß erfolgt die Beurteilung und Auswahl der Schaltalternative mit ausreichender Geschwindigkeit, um auch noch unerwartet starke Veränderungen des in dem Druckfluidsystem bereitgestellten Druckfluids berücksichtigen zu können. In anderen Worten braucht die durch die Beurteilung und Auswahl der Schaltalternative verursachte Verzögerung in dem Steuerungsverfahren nicht explizit berücksichtigt zu werden.

In einer anderen Ausführungsform des erfindungsgemäßen Verfahrens erfolgt die Ermittlung des Abschaltdruckes und/oder Zuschaltdruckes in Echtzeit. Demgemäß kann eine sofortige Anpassung der Steuerung an die sich in dem Druckfluidsystem verändernden Betriebszustände in ausreichender Geschwindigkeit erfolgen, ohne dass während der Zeit, welche zur Ermittlung des Abschaltdruckes und/oder Zuschaltdruckes nötig ist, sich grundlegend neue Betriebszustände, welche eine Auswahl einer anderen Schaltalternative notwendig machen würden, ergeben.

In einer weiterhin bevorzugten Ausführungsform des erfindungsgemäßen Verfahrens erfolgt die Steuerung der Anlage unter Berücksichtigung von Erfahrungsgrößen aus vergangenen Schalthandlungen (adaptive Steuerung). Insbesondere kann die Steuerung den Zuschaltdruck so bestimmen, dass der Förderbeginn eines in Last geschalteten Kompressors ausreichend früh erfolgt, um die Druckumkehr des realen Druckverlaufes möglichst nahe am Adaptionsdruck stattfinden zu lassen. Hierbei kann das Steuerverfahren für jeden Kompressor adaptiv eine Zuschaltreaktionszeit lernen, welche als Zeitspanne zwischen Übermittlung eines Zuschaltbefehls zum Umsetzen einer Schaltalternative und dem tatsächlichen Einsetzen der Auswirkung auf den realen Druckverlauf zu verstehen ist. Der Zuschaltdruck kann so gewählt werden, dass die Zuschaltreaktionszeit gleich der Zeitspanne ist, in der der reale Druckverlauf voraussichtlich vom Zuschaltdruck auf den Adaptionsdruck abfällt. Diese Zeitspanne kann etwa durch Prognose des weiteren Druckverlaufs aufgrund geeigneter Annahmen, etwa aufgrund der Annahme eines linear fallenden Druckverlaufes, abgeschätzt werden.

Ein adaptives Lernen der Zuschaltreaktionszeit für jeden Kompressor kann unter anderem durch Auswertung der realen Druckverläufe über mehrere ausgewählte periodische Zeitintervalle des realen Druckverlaufs eines Kompressors bzw. einer Kompressorgruppe erfolgen. Die adaptiv gelernten Zuschaltreaktionszeiten können weiter auch kontinuierlich durch geeignete Neuwertbildung, beispielsweise durch gleitende Mittelwertbildung, aktualisiert werden.

Das adaptive Lernverhalten der Steuerung unterstützt hierbei maßgeblich das Ziel, den Energiebedarf der Kompressoranlage zu optimieren. Das adaptive Verhalten basiert hierbei typischerweise auf unterlagerten Lernalgorithmen und adaptiven Größen, welche Größen im Laufe des Steuerungsverfahrens nachgestellt werden und von der Steuerung für jede weitere Beurteilung und Auswahl einer Schaltalternative aktualisiert zur Verfügung stehen. Folglich erlaubt das adaptive Lernverhalten eine automatische Anpassung der Steuerung an alle regelungstechnisch relevanten Eigenschaften und Bedingungen der Kompressoranlage im laufenden Betrieb. Da auch anwendungstechnisch relevante Größen erfasst und ausgewertet werden können (Energiebedarfsgrad), passt sich die Steuerung im Sinne einer energetischen Optimierung flexibel an das Verhalten der Kompressoranlage im Betriebszustand an.

Die unterlagerten Lernalgorithmen können die bezeichneten adaptiven Größen entweder durch Auswertung einer über einen längeren Zeitraum verfolgten Messgröße oder durch Auswertung einer geeigneten Anzahl von Einzelereignissen berechnen. Beide Vorgehensweisen sind geeignet, die adaptiven Größen im laufenden Betrieb der Kompressoranlage nachzuführen und dabei kurzzeitige Einflüsse bzw. singuläre Einflüsse aus der Berechnung der adaptiven Größen herauszuhalten.

Das adaptive Verhalten der Steuerung erlaubt, mit nur relativ wenig Regelparametern in der Steuerung auszukommen, wobei das Regelverhalten der Steuerung nicht manuell optimiert oder nachoptimiert werden muss und auch bei Erweiterungen oder Umbauten der Kompressoranlage keine weiteren Anpassungen erfolgen müssen. Der wesentliche Regelparameter ist hierbei typischerweise der Adaptionsdruck, während sich der Abschaltdruck bzw. die Schaltspieldruckdifferenz aus Abschaltdruck und Adaptionsdruck durch Kriterien im Hinblick auf die Minimierung des Energieverbrauchs ergeben. Demgemäß ist der betriebstechnische und wartungstechnische Aufwand für die Inbetriebnahme und Pflege der Steuerung minimal.

In einer weiterführenden Ausführungsform des erfindungsgemäßen Verfahrens umfassen die Erfahrungsgrößen den Energiebedarfsgrad (Energiebedarf pro Fluidmenge) einzelner Kompressoren oder bestimmter Kombinationen von Kompressoren und/oder Zuschaltreaktionszeiten der Kompressoren und/oder Verbrauchsverhalten der Druckfluidabnehmer und/oder Größe des Druckspeichers und/oder Druckkompensationsgrad der Kompressoren oder bestimmter Kombinationen von Kompressoren.

Der Energiebedarfsgrad beschreibt als adaptive Größe die Energieausnutzung einzelner Kompressoren oder Kombinationen von Kompressoren im laufenden Betrieb und stellt sich als Verhältnis aus dem Energiebedarf sowie der geförderten Fluidmenge durch die beteiligten Kompressoren dar. Hierbei wird der Energiebedarf sowie die geförderte Fluidmenge durch numerische Integration der rechnerisch und/oder messtechnisch zugänglich gemachten Leistungsaufnahme bzw. Fördermenge über einen geeignet gewählten Zeitraum berechnet. Da die Berechnung des Energiebedarfsgrads alle tatsächlich geleisteten Arbeiten (Lastarbeit, Leerlauf, Verlustarbeit, Schaltverlustarbeit) sowie die tatsächlich geförderte Fluidmenge mit ausreichender Genauigkeit beschreibt, kann der Energiebedarfsgrad im Gegensatz zu etwa rein aus theoretischen Nenndaten der Kompressoren berechneten Werten die tatsächliche energetische Ausnutzung im laufenden Betrieb relativ genau wiedergeben.

Hierbei ist es auch möglich in der Steuerung zu berücksichtigen, dass für Kompressoren sowie Gruppen von Kompressoren, die aufgrund von zeitlich zurückliegenden energetisch ungünstigen Lastzyklen eine entsprechend niedrige energetische Ausnutzung aufweisen, und bei der Auswahl der in Last zu schaltenden Aggregate möglicherweise ungerechtfertigt langfristig nachrangig eingestuft werden (positive Rückkopplung), der Energiebedarfsgrad durch einen Ausgleichsmechanismus sukzessive an aktuelle energetische Ausnutzungscharakteristiken der Kompressoranlage angepasst wird.

Hierbei ist auch anzufügen, dass beim Schalten in Last typischerweise Kompressoren, die sich im Leerlauf befinden und eine verhältnismäßig große Restleerlaufarbeit aufweisen, gegenüber Kompressoren bevorzugt werden, die eine verhältnismäßig kleinere Restleerlaufarbeit aufweisen oder deren Motor bereits ausgeschaltet ist, um Energie durch das Vermeiden von Leerlaufverlustarbeit und Anlaufarbeit einzusparen. Weiterhin werden beim Schalten aus Last typischerweise unter gleich oder ähnlich großen Kompressoren diejenigen mit voraussichtlich kleiner Leerlaufverlustarbeit bevorzugt, um folglich Energie durch das Vermeiden von Leerlaufarbeit einzusparen.

Die drucktechnische Wirkung der einzelnen Kompressoren auf die Steuerung wird in Form eines Druckkompensationsgrads der Kompressoren als adaptive Größe beschrieben, und kann über die Druckkompensationswirkung von Schaltvorgängen durch Mittelwertbildung über eine angemessen Anzahl von Einzelereignissen bestimmt werden. Hierbei ist die Druckkompensationswirkung der Schaltvorgänge aus dem zeitlichen Druckverlauf zu entnehmen.

Da bei der Auswahl der zu schaltenden Kompressoren vorzugsweise nur Kompressoren bzw. Gruppen von Kompressoren berücksichtigt werden, deren Druckkompensationswirkung (Summe der Druckkompensationsgrade) an den aktuellen Betriebszustand (aktueller Druckverlauf) der Kompressoranlage angepasst ist, wird durch das Schalten der ausgewählten Kompressoren typischerweise der gewünschte Druckverlauf rechtzeitig hergestellt, so dass praktisch nicht zusätzliche, energetisch nachteilige Schaltvorgänge benötigt werden.

In Betriebszuständen, welche durch eine schnelle Änderung der Druckfluidabnahme charakterisiert sind, können unter bestimmten Bedingungen Kompressoren ausgewählt werden, deren Druckkompensationswirkung den realen Druckverlauf nicht vollständig im Sinne einer Druckrichtungsumkehr ausgleichen kann, was zum Schaltzeitpunkt eine Unterkompensation des realen Druckverlaufs darstellt. Deshalb kann in der Steuerung in derartigen Fällen der Schaltzeitpunkt um eine an das Maß der Unterkompensation angepasste Zeitspanne vorgezogen werden. Ausführungsgemäß wird ein Zeitpuffer bereitgestellt, um bei Bedarf weitere Kompressoren rechtzeitig zu schalten, wodurch erreicht werden kann, dass bestenfalls keine weiteren Kompressoren geschaltet werden müssen, oder dass nach einem Zuschaltvorgang zumindest der Druck für relativ längere Zeit auf einem energetisch günstigen Niveau stabilisiert werden kann.

Weiterhin kann es in sehr seltenen Fällen auftreten, dass unter Bedingungen von starken Schwankungen der Druckfluidentnahme aus der Kompressoranlage der Adaptionsdruck unzulässig unterschritten wird. In solchen Situationen kann die Steuerung bei Bedarf unverzüglich und situationsangepasst der Abweichung des realen Druckverlaufs vom Adaptionsdruck entgegenwirken, indem unverzüglich ein oder mehrere Kompressoren zusätzlich in Last geschaltet werden. Es kann noch während des laufenden Zuschaltvorganges, das heißt noch bevor die Druckkompensationswirkung der zugeschalteten Kompressoren eingetreten ist, anhand des realen Druckverlaufs überprüft werden, ob die zukünftige Druckkompensationswirkung voraussichtlich ausreichend sein wird, um einen gewünschten realen Druckverlauf herzustellen. Wird die zukünftige Druckkompensationswirkung als ausreichend ermittelt, wird kein weiterer Kompressor in Last geschaltet. Im gegenteiligen Fall, werden sofort ein oder mehrere Kompressoren in Last geschaltet.

In einer alternativen Ausführungsform des erfindungsgemäßen Verfahrens können die Erfahrungsgrößen Folgendes umfassen: Druckkompensationsgrad eines Kompressors in Abhängigkeit vom Speichervolumen und dem Installationsschema des Druckfluidsystems und/oder Energiebedarfsgrad eines Kompressors in Abhängigkeit von seiner bisherigen Betriebsweise, seiner Umgebungstemperatur, seines Wartungs-, Verschleiß- und Verschmutzungszustandes und/oder Zuschaltreaktionszeit und Druckkompensationsgrad eines Kompressors in Abhängigkeit von typischen Mustern der Veränderung der Entnahme von Druckfluid. Demgemäß kann die Steuerung auch nicht rein kompressorspezifische Eigenschaften adaptiv erlernen, sondern auch zum Teil Eigenschaften, die sich aus dem Zusammenspiel von Kompressoren und dem Betriebszustand bzw. der jeweiligen Einsatzumgebung ergeben.

In einer weiteren bevorzugten Ausführungsform des erfindungsgemäßen Verfahrens zeichnet sich dieses dadurch aus, dass eine Zuschaltung von Kompressoren oder Kombinationen von Kompressoren so rechtzeitig vorgenommen wird, dass unter Berücksichtigung des Anlaufverhaltens des Kompressors oder der Kompressorkombination, insbesondere unter Berücksichtigung von vorzugsweise adaptiv gelernten Zuschaltreaktionszeiten, der reale Druckverlauf den Adaptionsdruck möglichst genau, vorzugsweise mit weniger als 5%, weiter vorzugsweise mit weniger als 2% Abweichung erreicht, und weiter vorzugsweise nicht oder nur unwesentlich und/oder kurz unterschreitet. Demgemäß erreicht der reale Druckverlauf in seinem minimalen Druckwert in relativ engen Grenzen möglichst genau den virtuell ermittelten Adaptionsdruck.

In einer weiteren Ausführungsform des erfindungsgemäßen Verfahrens kann vorgesehen sein, dass bei der Ermittlung der Schaltalternativen als in Last zu schaltende Kompressoren bevorzugt solche Kompressoren oder Kombinationen von Kompressoren ausgewählt werden, die günstige Werte von Erfahrungsgrößen für den Energiebedarfsgrad aufweisen. Demzufolge wird ein möglichst energiesparender Betrieb der Kompressoranlage gewährleistet.

In einer anderen Ausführungsform des Verfahrens zum Steuern einer Kompressoranlage werden bei der Ermittlung der Schaltalternativen als in Last zu schaltende Kompressoren bevorzugt solche Kompressoren ausgewählt, die sich in Leerlauf befinden und noch eine große Restleerlaufzeit bzw. Restleerlaufarbeit aufweisen, und/oder für in Leerlauf bzw. Stillstand zu schaltende Kompressoren bevorzugt solche Kompressoren ausgewählt, die eine geringe Leerlaufzeit bzw. Leerlaufarbeit aufweisen. Demgemäß wird auch die Gesamtverlustarbeit als Summe aller Verlustarbeiten vermindert, da eine Reduzierung der Leerlaufarbeit bei der Ermittlung der auszuwählenden Schaltalternative im Sinne einer energetischen Optimierung berücksichtigt wird.

In einer weiteren bevorzugten Ausführungsform des erfindungsgemäßen Verfahrens ist vorgesehen, dass die Ermittlung von Schaltalternativen und/oder die Ermittlung eines Abschaltdruckes und/oder die Ermittlung eines Zuschaltdruckes unter der Annahme einer konstanten Druckfluidabnahme erfolgen. Hierbei erfolgt die Annahme einer konstanten Druckfluidabnahme sinnvollerweise nur für die Bestimmung des jeweils nächsten Zu- oder Abschaltdruckes. Für die nachfolgende Ermittlung eines zukünftigen und darauffolgenden Zu- oder Abschaltdruckes wird gegebenenfalls von einem neuen wiederum konstanten Wert für die Druckfluidabnahme ausgegangen. Diese Annahme einer konstanten Druckfluidabnahme erlaubt, den realen Druckverlauf während eines Schaltspieles, einschließlich des nächsten Zuschaltvorganges, unter Verwendung mathematisch einfach handzuhabender Ausdrücke in energetischer Hinsicht kalkulieren zu können. Folglich kann auch ein in Bezug auf den Betrieb der Kompressoranlage energetisches Optimum bzw. maximaler Wirkungsgrad für die Zeitdauer eines Schaltspiels berechnet werden.

In einer weiteren Ausführungsform des erfindungsgemäßen Verfahrens wird die Ermittlung eines aktuellen Wertes der Druckfluidentnahme entweder durch eine Messeinrichtung bestimmt und/oder aus dem zeitlich vergangenen realen Druckverlauf, dem Betriebszustand der Kompressoren und/oder der gegebenenfalls adaptiv gelernten Speichergröße der Kompressoranlage berechnet.

In einer weiteren Ausführungsform des erfindungsgemäßen Verfahrens zeichnet sich dieses dadurch aus, dass unter vorbestimmten Bedingungen die bei Erreichen des Zuschaltdruckes oder Abschaltdruckes auszulösenden Zuschaltbefehle oder Abschaltbefehle unterdrückt und/oder unabhängig vom Erreichen des Zuschaltdruckes oder des Abschaltdruckes zusätzliche Zuschaltbefehle oder Abschaltbefehle ausgelöst werden können. So können beispielsweise zusätzliche Abschaltbefehle bei Annäherung an die obere Druckgrenze ausgelöst werden, um ein Überschreiten der oberen Druckgrenze durch den realen Druckverlauf zu verhindern. Weiterhin kann bei deutlicher und anhaltender positiver Krümmung des sinkenden Druckverlaufs aufgrund einer sich reduzierenden Druckfluidentnahme aus dem Druckfluidsystem ein ermittelter Zuschaltbefehl unterdrückt werden, um den weiteren realen Druckverlauf verbessert abschätzen zu können. Demzufolge können auch Abschaltbefehle bei deutlicher und anhaltender negativer Krümmung eines steigenden realen Druckverlaufs unterdrückt werden, welcher aufgrund steigender Druckfluidentnahme resultiert. Auch hier wird zur Durchführung einer verbesserten energetischen Berechnung die von der Steuerung ausgewählte Schaltalternative zunächst unterdrückt, um den weiteren Druckverlauf besser abschätzen zu können, und um folglich eine hinsichtlich des Energieverbrauchs verbesserte Schalthandlung zukünftig ausführen zu können.

In einer anderen ebenfalls bevorzugten Ausführungsform des erfindungsgemäßen Verfahrens finden bei Ermittlung mehrerer Schaltalternativen als energetisch gleichwertig andere Kriterien bei der Auswahl zusätzlich Berücksichtigung, wie die Betriebsstundenzahl eines in Betracht gezogenen Kompressors. Demgemäß kann gewährleistet werden, dass die Anzahl an Betriebsstunden unterschiedlicher von der Kompressoranlage umfasster Kompressoren weitgehend einheitlich ist, wodurch wartungsbedingte bzw. benutzungsbedingte Ausfälle einzelner Kompressoren auf ein vorbestimmtes Maß reduziert werden können.

Gemäß einer weiteren Ausführungsform des erfindungsgemäßen Verfahrens wird die ermittelte Abschaltung nur dann von der Steuerung freigegeben, wenn sichergestellt ist, dass sich ein gegebenenfalls notwendiger Zuschaltvorgang unter Berücksichtigung des Anlaufverhaltens einer möglichen Schaltkombination rechtzeitig vornehmen lässt. Durch eine derartige Berücksichtigung des Anlaufverhaltens eines Kompressors bzw. einer Kombination von Kompressoren der Kompressorenanlage lässt sich die Bereitstellung eines vorbestimmten Überdrucks in dem Druckfluidsystem stets aufrecht erhalten. Ein unvorhergesehenes und im Normalfall energetisch ungünstiges Zuschalten weiterer Kompressoren bzw. Kompressorengruppen aufgrund der Freigabe einer ermittelten Schalthandlung, die sich nicht rechtzeitig umsetzen lässt, kann somit vermieden werden.

Weitere Ausführungsformen der Erfindung ergeben sich aus den Unteransprüchen.

Nachfolgend wird die Erfindung anhand von Ausführungsbeispielen beschrieben die anhand der Abbildungen näher erläutert werden.

Hierbei zeigen:

Fig. 1    eine schematische Darstellung einer eine Mehrzahl von Kompressoren umfassenden Kompressoranlage;

Fig. 2    eine schematische Darstellung einer Ausführungsform der erfindungsgemäßen Steuerungseinrichtung zur Steuerung der in Fig. 1 dargestellten Kompressoranlage;

Fig. 3    eine schematische Darstellung einer Ausführungsform der erfindungsgemäßen Steuerung in Flussdiagrammdarstellung;

Fig. 4   eine Darstellung eines realen Druckverlaufs in einer Kompressoranlage unter Angabe spezifischer Steuerungsgrößen gemäß einer Ausführungsform des erfindungsgemäßen Steuerungsverfahrens;

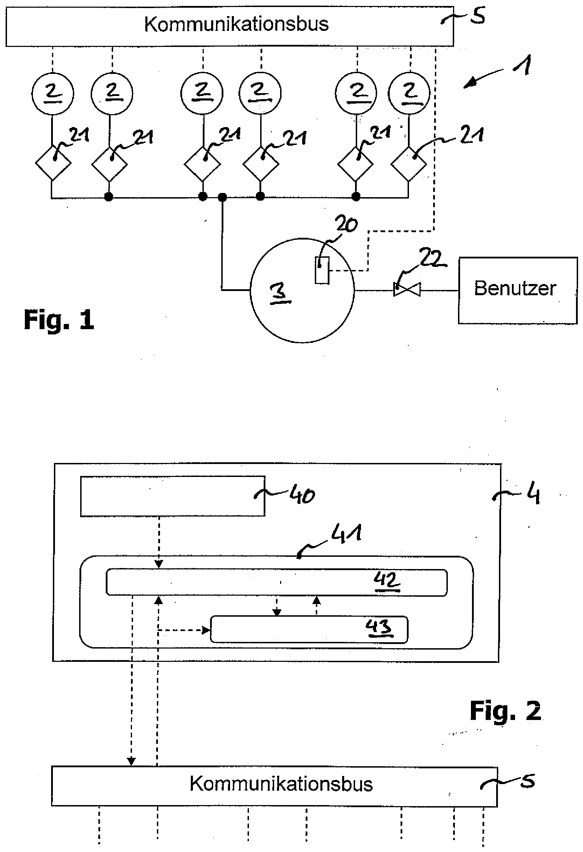

Fig. 1 zeigt eine schematische Darstellung einer Kompressoranlage 1, welche insgesamt sechs jeweils mit einem Kommunikationsbus 5 verbundene Kompressoren 2 aufweist. Jeder der Kompressoren 2 ist über geeignete Druckleitungen mit Aufbereitungselementen 21 verbunden, welche beispielsweise als Trockner oder Filter ausgeführt sein können. Die sechs Kompressoren 2 versorgen druckfluidtechnisch ein zentrales Druckfluidreservoir 3, welches zusätzlich eine Messeinrichtung 20 aufweist, die ebenfalls mit dem Kommunikationsbus 5 kommunikationstechnisch in Verbindung steht. Die Messeinrichtung 20 erlaubt hierbei etwa eine kontinuierliche Messung des Druckzustandes in dem Druckfluidreservoir 3 und vermag über den Kommunikationsbus 5 Messparameter an die Steuerung der Kompressoranlage 1 weiterzuleiten, welche in dem Steuerungsverfahren 41 (vorliegend nicht gezeigt) in einem regelungstechnischen Sinne zur Verfügung stehen.

Das in dem Druckfluidreservoir 3 durch die Kompressoren 2 bereitgestellte Druckfluid wird über eine geeignete Druckleitung, welche alternativ weitere Funktionselemente 22 (vorliegend etwa ein Stellventil) umfassen kann, an einen Benutzer zur Druckfluidentnahme weitergeleitet. Die Steuerung bzw. Regelung des in dem Druckfluidreservoir 3 aufrechterhaltenen Überdrucks erfolgt mithilfe einer zentralen Steuerungseinrichtung 4, welche vorliegend nicht gezeigt ist, die jedoch mit dem Kommunikationsbus 5 in kommunikationstechnischer Verbindung steht. Hierbei kann die Kommunikation zwischen den Kompressoren 2 mit dem Kommunikationsbus 5 über konventionelle Signalverdrahtungsleitungen erfolgen oder aber auch über drahtlose Kommunikationswege.

Ausführungsgemäß kann das gewählte Kommunikationsprotokoll den Ablauf des weiter unten noch in größerem Detail ausgeführten Steuerungsverfahrens in Echtzeit gewährleisten. Der in dem Druckfluidreservoir 3 vorherrschende Druck wird von der Messeinrichtung 20 ebenfalls vorzugsweise in Echtzeit erfasst. In praktischem Sinne ist eine Abtastung in Zeitintervallen von weniger als einer Sekunde, vorzugsweise weniger als einer Zehntel Sekunde hierfür geeignet. Bei typischen Druckfluidanwendungen misst die Messeinrichtung 20 einen Überdruck im Druckreservoir 3. Bei ebenfalls möglichen Vakuumanwendungen, wie oben beschreiben, misst die Messeinrichtung 20 einen entsprechenden Unterdruck, der ebenfalls in dem Druckfluidreservoir 3 bereit gestellt sein kann. Wie dem Fachmann verständlich ist, sind hierfür die Kompressoren 2 durch geeignete Vakuumpumpen ersetzt. Der von der Messeinrichtung 20 erfasste Druckwert kann je nach Verwendungszweck mehr oder weniger stark geglättet werden, absolut oder zeitlich differenziell oder kombinatorisch ausgewertet werden, um so in das Steuerungsverfahren bzw. Regelverfahren eingeführt zu werden. Der so konditionierte Druckwert kann unter anderem für die Berechnung eines energetisch optimalen Abschaltdruckes 103 (vorliegend nicht gezeigt), für die Berechnung eines Druckkompensationsgrads der Kompressoren und für die Berechnung von Zuschaltreaktionszeiten der Kompressoren im Stillstand bzw. im Leerlaufzustand verwendet werden.

Unterstützend kann zudem noch eine weitere Messeinrichtung vorgesehen sein, welche ebenfalls mit der zentralen Steuerungseinrichtung verbunden ist und den gemessenen Druckfluidverbrauch bzw. die Druckfluidentnahme ermittelt, um etwa Zuschaltreaktionszeiten mit höherer Genauigkeit zu bestimmen.

Die über den Kommunikationsbus 5 mit der zentralen Steuerungseinrichtung ausgetauschten Betriebsdaten der Kompressoren betreffen unter anderem den aktuellen Betriebszustand jedes Kompressors. Diese Information wird vom Steuerungsverfahren bzw. Regelverfahren unter anderem für die Auswahl der in Last zu schaltenden Kompressoren benötigt. Weiterhin umfassen diese Informationen die Motorendrehzahl aufgrund deren das Steuerungsverfahren den Energiebedarf eines Kompressors bzw. einer Kompressorgruppe ermitteln kann. Weiter können diese Informationen zu kompressorinternen Drucksensoren zur Ermittlung von Nachlaufzeiten enthalten, wenn sich der Kompressor etwa im Leerlauf befindet, bzw. voraussichtliche Nachlaufzeiten, wenn sich der Kompressor im Lastbetrieb befindet, sowie Informationen darüber, ob sich der Kompressor überhaupt im Lastbetrieb befindet oder nicht. Alternativ können einige oder alle der genannten Betriebsdaten der Kompressoren auch im Steuerungsverfahren datentechnisch nachgebildet oder approximiert werden, so dass diese nicht über den Kommunikationsbus 5 ausgetauscht werden müssen und der zentralen Steuerungseinrichtung trotzdem in ausreichender Annäherung zur Verfügung stehen.

Die Kompressoranlage 1 kann zudem aus anwendungstechnischen Gründen Aufbereitungselemente 21 aufweisen, die zu einer charakteristischen Änderung der anlageninternen Fluiddrücke Anlass geben. Der Einfluss der Aufbereitungselemente 21 in der Kompressoranlage 1 kann jedoch durch ein geeignetes adaptives Lernverhalten der Steuerung bzw. Regelung geeignet ausgeglichen werden. Beispielsweise kann eine zunehmende Zeitverzögerung in der Druckfluidförderung zwischen einem Kompressor und dem zentralen Druckfluidreservoir aufgrund eines zunehmend verschmutzten Filters in Form einer sich verlängernden Zuschaltreaktionszeit des Kompressors aus dem Auszustand sowie aus dem Leerlaufzustand adaptiv ausgeglichen werden. Eine solche verlängerte Zuschaltreaktionszeit kann ohne weiteres durch die Steuerung ausgeglichen werden, so dass sich die zunehmende Filterverschmutzung nicht nachteilig auf die Aufrechterhaltung des vorbestimmten Überdrucks in dem Druckfluidreservoir 3 auswirkt.

Weiterhin kann die vorliegende Kompressoranlage 1 aufgrund von anwendungstechnischen Überlegungen ein oder mehrere Druckregelventile zur Druckstabilisierung aufweisen.

Fig. 2 zeigt eine schematische Darstellung des Steuerungsverfahrens der Steuerungseinrichtung 4. Die Steuerungseinrichtung 4 ist hierbei mit dem Kommunikationsbus 5 in kommunikationstechnischem Kontakt und kann sowohl Informationen ein- wie auch auslesen. Insbesondere kann die Steuerungseinrichtung 4 Schaltbefehle über den Kommunikationsbus 5 an einzelne Kompressoren 2 übermitteln. Zur Zuführung von Regelparametern bzw. zur Eingabe von Daten zur Charakterisierung der Kompressoren 2, umfasst die Steuerungseinrichtung 4 eine Zuführungsschnittstelle 40. Diese Daten werden an das Steuerungsverfahren 41 weitergegeben, welches etwa im Sinne eines adaptiven Regelverfahrens als Softwareapplikation implementiert sein kann. Das Steuerungsverfahren 41 erzeugt zur Steuerung der Kompressoren 2 geeignete Steuerungsbefehle bzw. Schaltbefehle, welche den Kompressoren 2 über den Kommunikationsbus 5 übermittelt werden. Hierzu umfasst das Steuerungsverfahren 41 einen Steuerungsalgorithmus 42, welcher den Energiebedarf der Kompressoranlage innerhalb eines Druckspielraums zwischen Adaptionsdruck 101 und oberer Druckgrenze 104 optimiert. Hierbei ist darauf hinzuweisen, dass der Steuerungsalgorithmus 42 auch als Regelalgorithmus verstanden werden kann. Weiter umfasst die Steuerungseinrichtung 4 eine vorliegend nicht gezeigte Systemuhr mit geeignetem Taktgeber, welche dem Steuerungsverfahren 41 eine geeignete Zeitvorgabe zur Verfügung stellen kann.

Ausführungsgemäß erlaubt der Steuerungsalgorithmus 42 eine energiegeführte adaptive Regelung und ermittelt einen Abschaltdruck 103 für die aus Last zu schaltenden Kompressoren innerhalb des zur Verfügung stehenden Druckspielraums energetisch zielgerichtet. Hierfür berechnet der Steueralgorithmus 42 in mathematisch analytischer Form den energetisch optimalen Abschaltdruck 103. Dieser optimale Abschaltdruck 103 ist ausführungsgemäß definiert durch den Minimalwert einer Funktion, welche die während eines Schaltspiels verursachte Gesamtverlustleistung aller Kompressoren 2 der Kompressoranlage 1 abhängig vom Abschaltdruck 103 beschreibt. Hierbei geht ausführungsgemäß die Annahme in die Berechnung ein, dass die Druckfluidentnahme im Mittel konstant bleibt und sich deshalb das Schaltspiel in Bezug auf die mittleren Druckveränderungen zwischen zwei aufeinander folgenden minimalen bzw. maximalen Druckwerten gleichartig wiederholt. Durch die Annahme einer im Mittel konstanten Druckfluidentnahme können in dem realen Druckverlauf auch Schwankungen des Druckverlaufs berücksichtigt werden.

Der energiegeführte Steuerungsalgorithmus 42 nutzt hierbei vorhandene regelungstechnische Freiheitsgrade, indem diese Freiheitsgrade nicht durch fest vorgegebene Regelparameter oder etwa einen zu kleinen oder starr vorgegebenen Druckregelbereich besetzt oder eingeschränkt sind, sondern optimiert diese in energetischer Hinsicht. Sowohl die Auswahl der zu schaltenden Kompressoren 2 als auch Zeitpunkte bzw. Drücke für die umzusetzenden Schalthandlungen sind nicht parametriert, sondern werden vom Steuerungsverfahren 41 fallweise energetisch optimiert berechnet.

Neben der Energieführung des Steuerungsverfahrens 41 zeichnet sich dieses auch noch durch ein adaptives Verhalten hinsichtlich der Anpassung von adaptiven Größen im laufenden Betrieb aus. Hierbei unterstützt das adaptive Verhalten maßgeblich die Optimierung des Energiebedarfs der Kompressoranlage 1. Das adaptive Verhalten basiert auf einem von dem Steuerungsverfahren 41 umfassten Adaptionsalgorithmus 43, welcher alle adaptiven Größen während des Betriebs der Kompressoranlage nachführt und dem Steuerungsalgorithmus 42 zur Verfügung stellt. Das adaptive Verhalten erlaubt auch eine automatische Anpassung der Auswahl der zu schaltenden Kompressoren an alle regelungstechnischen relevanten, festen und variablen Eigenschaften bzw. Bedingungen der Kompressoranlage sowie der Anwendung im laufenden Betrieb. Beispiele für derartige adaptiven Größen kann der Energiebedarf pro geförderter Fluidmenge eines Kompressors 2 oder einer Kombination von Kompressoren 2 im laufenden Betrieb sein, wie auch das drucktechnisch wirksame Speichervolumen des Druckfluidsystems und das zeitliche Schaltverhalten der Kompressoren 2.

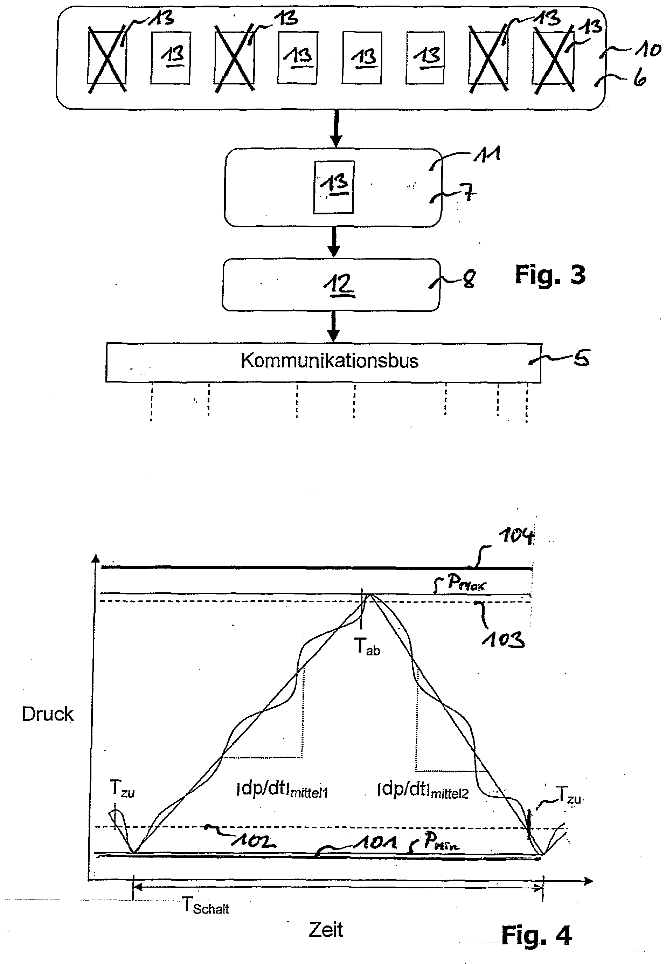

Fig. 3 zeigt eine schematische Darstellung der Abfolge einzelner Schritte gemäß einer Ausführungsform des erfindungsgemäßen Verfahrens zur Steuerung einer Kompressoranlage 1 in Flussdiagrammdarstellung. Hierbei werden in einem Vorselektionsschritt 10 in einer Ausschlusseinrichtung 6 einer nicht weiter gezeigten Steuerungseinrichtung 4, vorzugsweise unter Berücksichtigung der aktuellen Bedingungen, bestimmte Schaltalternativen 13 aus der Vielzahl von kombinatorisch zur Verfügung stehenden Schaltalternativen 13 ausgeschlossen. Die Vorselektion kann beispielsweise auf Grundlage von Selektionskriterien erfolgen, welche der technischen Umsetzbarkeit der vorbestimmten Schaltalternativen 13 Rechnung trägt. Vorliegend stehen beispielsweise insgesamt acht kombinatorisch mögliche Schaltalternativen 13 zur Verfügung, aus welchen sich vier Schaltalternativen 13 (durch Auskreuzung deselektiert) als für die vorliegenden Betriebsbedingungen ungeeignet herausgestellt haben und somit vorab deselektiert werden. Aus den verbleibenden vier Schaltalternativen 13 wird in einem Hauptselektionsschritt 11 in einer Auswahleinrichtung 7 der nicht weiter gezeigten Steuerungseinrichtung 4 eine Schaltalternative 13 unter Heranziehung einer oder mehrerer Optimierungskriterien ausgewählt, indem alle in dem Vorselektionsschritt 10 nicht deselektierten Schaltalternativen 13 gegeneinander abgewogen werden. Die in dem Hauptselektionsschritt 11 ermittelte ausgewählte Schaltalternative 13 wird in einem Steuerschritt in einer Ausgabeeinrichtung 8 der nicht weiter gezeigten Steuerungseinrichtung 4 zur Umsetzung in der Kompressoranlage 1 ausgegeben. Sinnbildlich wurde die Ausgabe vorliegenden als Weiterleitung von Information aus der Ausgabeeinrichtung 8 an den Kommunikationsbus 5 dargestellt, welche jedoch vorliegend nicht einschränkend zu verstehen sein soll.

Fig. 4 zeigt eine Darstellung des Realdruckverlaufs 105 in dem Druckfluidsystem während eines periodischen Zeitintervalls $T_{Schalt}$. Die Länge des periodischen Zeitintervalls $T_{Schalt}$ betrifft hierbei gerade die Länge eines Schaltspiels. Gemäß einer Ausführungsform des erfindungsgemäßen Steuerungsverfahrens ermittelt die Steuerung einen individuellen Abschaltdruck 103 für die aus Last zu schaltenden Kompressoren 2 innerhalb des zur Verfügung stehenden Druckspielraums nach Prinzipien der energetischen Optimierung. Der Druckspielraum ist hierbei der Druckbereich zwischen einem nicht zu unterschreitenden Adaptionsdruck 103 und einer nicht zu überschreitenden oberen Druckgrenze 104. Ausführungsgemäß wird die energetisch optimale Schaltspieldruckdifferenz und der energetisch optimale Abschaltdruck 103 für die aus Last zu schaltenden Kompressoren 2 als energetisches Optimum mathematisch-analytisch berechnet. Für diese Berechnung wird angenommen, dass die Druckfluidentnahme im Mittel konstant ist. Die Druckabnahme kann folglich als Steigung einer linear fallenden Geraden, welchen den realen Druckverlauf annähernd beschreibt, wiedergegeben werden. Analog kann die Druckfluidzunahme in dem Druckfluidsystem durch eine weitgehend ähnliche mathematische Mittelung des real steigenden Druckverlaufes als monoton steigende Gerade beschrieben werden.

Unter diesen Voraussetzungen der im Mittel konstanten Druckfluidentnahme kann das Schaltspiel einschließlich des nächsten Zuschaltvorganges energetisch durch eine einfache mathematische Darstellung beschrieben werden. Aufgrund dieser einfachen mathematischen Darstellung ist es möglich, das energetische Optimum bzw. den maximalen Wirkungsgrad der Kompressoranlage während eines solchen Schaltspiels zu berechnen. Zu diesem Zweck regelt das Steuerungsverfahren 41 den Abschaltdruck 103 der zu schaltenden Kompressoren 2 derart, dass die gesamte vom Schaltspiel abhängige Gesamtverlustleistung (Gesamtverlustarbeit pro periodisches Zeitintervall $T_{Schalt}$) minimal wird.

Zu dieser vom Schaltspiel abhängigen Verlustleistung tragen sowohl die lastlaufenden als auch die schaltenden und leerlaufenden Kompressoren 2 bei. Der Energiebedarf der lastlaufenden Kompressoren (Lastarbeit) steigt mit der Schaltspieldruckdifferenz, weil sich deren interne Arbeitsdruckdifferenz im Mittel erhöht. Im Gegensatz hierzu verringert sich jedoch die Schaltverlustarbeit sowie die Leerlaufverlustarbeit der schaltenden Kompressoren mit sich erhöhender Schaltspieldruckdifferenz, da die Anzahl (Frequenz) der Schaltspiele sinkt. Bei der berechneten Schaltspieldruckdifferenz nimmt die Summe der Verlustkomponenten bei energetischer Optimierung ein Minimum ein. Der zu minimierende Ausdruck ergibt sich gemäß der folgenden Gleichung (1):

$$P_V = ( \Delta W_{Last} + \Delta W_{Leer} + \Delta W_{Schalt}) / T_{Schalt} \qquad (1)$$

Hierbei ist $\Delta W_{Last}$ die Verlustarbeit der lastlaufenden Kompressoren pro Schaltspiel aufgrund der Drucküberhöhung gegenüber dem Zuschaltdruck, $\Delta W_{Leer}$ die Leerlaufverlustarbeit der zu schaltenden Kompressoren pro Schaltspiel aufgrund ihrer Leerlaufleistungen und ihrer Nachlaufzeit, $\Delta W_{Schalt}$ die Schaltverlustarbeit pro Schaltspiel der zu schaltenden Kompressoren 2 aufgrund des langsamen internen Druckausgleichvorganges beim Schalten in Leerlauf, gegebenenfalls eines Motorneuanlaufs und der internen Druckangleichung beim Schalten in Last, $T_{Schalt}$ die Schaltspieldauer, welche sich über einen periodischen Druckanstieg und den darauffolgenden Druckabfall zeitlich erstreckt.

Die einzelnen Komponenten der Gesamtverlustarbeit berechnen sich hierbei gemäß Gleichung (2):

$$\Delta W_{Last} = 0{,}5 \bullet r_{Last} \bullet \Delta p_{Schalt}^2 \bullet (P_{Last1} / |dp/dt|_{mittel1} + P_{Last2} / |dp/dt|_{mittel2}) \qquad (2)$$

Hierbei ist $r_{Last}$ die relative Erhöhung der Lastleistung des lastlaufenden Kompressors 2 pro Druckeinheit, $\Delta p_{Schalt}$ die Schaltspieldruckdifferenz, $P_{Last1}$ die Lastleistung der während des Druckverlaufs in Richtung Abschaltdruck 103 lastlaufenden Kompressoren, inklusive der zu schaltenden Kompressoren 2, bei Zuschaltdruck 102, $|dp/dt|_{mittel1}$ der Betrag des voraussichtlichen mittleren Druckanstiegs während des realen Druckverlaufs in Richtung des Abschaltdruckes 103, kalkuliert auf Basis eines angemessenen Zeitraums, $P_{Last2}$ die Lastleistung der während des Druckverlaufs in Richtung Zuschaltdruck 102 lastlaufenden Kompressoren 2, exklusive der zu schaltenden Kompressoren 2, beim Zuschaltdruck 102, $|dp/dt|_{mittel2}$ der Betrag der voraussichtlichen mittleren Drucksteigung während des Druckverlaufs in Richtung des Zuschaltdrucks 102 aus $|dp/dt|_{mittel1}$ und der Druckkompensationswirkung der zu schaltenden Kompressoren 2.

Die Leerlaufverlustarbeit $\Delta W_{Leer}$ berechnet sich aufgrund der folgenden Gleichung (3):

$$\Delta W_{Leer} = \Sigma (P_{Leer} \bullet T_{Leer}) \qquad (3)$$

Hierbei ist $P_{Leer}$ die Leerlaufleistung der einzelnen zu schaltenden Kompressoren und $T_{Leer}$ die Nachlaufzeit im Leerlauf der einzelnen zu schaltenden Kompressoren begrenzt auf eine Zeit zwischen dem Abschalten und dem Zuschalten.

Die Schaltverlustarbeit $\Delta W_{SChalt}$ berechnet sich als Summe der Schaltverlustarbeiten $W_{Schalt}$ pro Schaltspiel der zu schaltenden Kompressoren 2 gemäß der folgenden Gleichung (4):

$$\Delta W_{Schalt} = \Sigma\ W_{Schalt} \quad (4)$$

Weiterhin kann das periodische Zeitintervall $T_{Schalt}$ eines Schaltspiels aufgrund des folgenden Zusammenhangs gemäß Gleichung (5) leicht berechnet werden, welcher sich aus einfachen geometrischen Überlegungen gemäß Fig. 4 ergibt:

$$T_{Schalt} = \Delta p_{Schalt} \bullet (1\ /\ |dp/dt|_{mittel1} + 1\ /\ |dp/dt|_{mittel2}) \quad (5)$$

Die Berechnung der energetisch-optimalen Schaltspieldruckdifferenz $\Delta p_{Schalt,opt}$ lässt sich mit Gleichung (1) durch einfaches Einsetzen der Terme für die einzelnen Verlustarbeiten $\Delta W_{Last}$, $\Delta W_{Leer}$, $\Delta W_{Schalt}$ sowie die Länge des periodischen Zeitintervalls (Schaltspieldauer) $T_{Schalt}$ in die Formel gemäß Gleichung 1 für die vom Schaltspiel abhängige Verlustleistung $P_V$, durch anschließendes Ableiten nach der Schaltspieldruckdifferenz $\Delta p_{Schalt}$ und entsprechendes Null-setzen der Ableitung berechnen. Folglich lässt sich die energetisch optimale Schaltspieldruckdifferenz $\Delta p_{Schalt,opt}$ als einen mathematisch einfach handzuhabender Ausdruck gemäß Gleichung (6) darstellen:

$$\Delta P_{schalt,opt} = \sqrt{\{[\ \Sigma\ (P_{Leer} \bullet T_{Leer}) + \Sigma\ W_{Schalt}]/}$$
$$[0,5 \bullet r_{Last} \bullet (P_{Last1}\ /\ |dp/dt|_{mittel1} + P_{Last2}\ /\ |dp/dt|_{mittel2})]\} \quad (6)$$

Der energetisch optimale Abschaltdruck ergibt sich bei Druckfluidanwendungen als Summe aus dem Adaptionsdruck 101 sowie der berechneten energetisch optimalen Schaltspieldruckdifferenz $\Delta p_{Schalt,opt}$. Bei entsprechenden Vakuumanwendungen etwa ergibt sich der energetisch optimale Abschaltdruck 103 als die Differenz der beiden vorab genannten Werte wie dem Fachmann verständlich ist.

Weiterhin ist darauf hinzuweisen, dass das ausführungsgemäße Steuerungsverfahren die Verzögerungszeiten der einzelnen Kompressoren 2 bzw. Kombinationen von Kompressoren 2 berücksichtigt, welche aus den Zeiten zwischen Zu- bzw. Abschalten eines Kompressors 2 und den Zeitpunkten der tatsächlichen Umsetzung der Zustandsänderung bestimmt sind. Demgemäß sind auch die Zuschaltzeitpunkte $T_{zu}$ wie die Abschaltzeitpunkte $T_{ab}$ im Vergleich zu den minimalen Druckwerten des realen Druckverlaufs 105 bzw. im Vergleich zu dem maximalen Druckwerten zeitlich nach vorne versetzt.

Weiterhin ist in Fig. 4 ein teilweise idealisiertes Schaltspiel zu Veranschaulichungszwecken dargestellt. Eine obere Druckgrenze 104 ist systembedingt festgelegt, beispielsweise durch die Druckfestigkeit der Komponenten. Die im Diagramm unterste Linie stellt den bereits mehrfach diskutierten Adaptionsdruck 101 dar. Der Druckverlauf bewegt sich bei dem hier dargestellten Schaltspiel zwischen einem (lokalen) Minimalwert $P_{min}$ und einem (lokalen) Maximalwert $P_{max}$. Zu einem Zeitpunkt $T_{AB}$, nämlich bei Erreichen des Abschaltdrucks 103 bei ansteigendem Druckverlauf werden Maßnahmen zur Reduzierung der Erzeugung von komprimiertem Druckfluid getroffen, die sich so auswirken, dass der Druck kurzzeitig noch über den Abschaltdruck 103 auf den (lokalen) Maximalwert $P_{max}$ ansteigt, dann jedoch sich der Druckanstieg in einen Druckabfall umkehrt. Sobald bei sinkendem Druckverlauf der Zuschaltdruck 102 erreicht wird, werden Maßnahmen zur Erhöhung der Erzeugung von komprimiertem Druckfluid ergriffen, so dass zwar der Druck noch weiter auf einen (lokalen) Minimalwert $P_{min}$ sinkt, dann jedoch sich der Druckabfall in einen erneuten Druckanstieg umkehrt.

Bezugszeichen:

1 Kompressoranlage
2 Kompressor
3 Druckfluidreservoir
4 Steuerungseinrichtung
5 Kommunikationsbus
6 Ausschlusseinrichtung
7 Auswahleinrichtung
8 Ausgabeeinrichtung
9 Abschaltdruckermittlungseinrichtung
10 Vorselektionsschritt

| 11 | Hauptselektionsschritt |
| 12 | Steuerschritt |
| 13 | Schaltalternative |
| 20 | Messeinrichtung |
| 21 | Aufbereitungselement |
| 22 | Funktionselement |
| 30 | Datensatz |
| 40 | Zuführungsschnittstelle |
| 41 | Steuerungsverfahren |
| 42 | Steuerungsalgorithmus |
| 43 | Adaptionsalgorithmus |
| | |
| 101 | Adaptionsdruck |
| 102 | Zuschaltdruck |
| 103 | Abschaltdruck |
| 104 | obere Druckgrenze |
| 105 | realer Druckverlauf |
| | |
| $T_{zu}$ | Zuschaltzeitpunkt |
| $T_{ab}$ | Abschaltzeitpunkt |

**Patentansprüche**

1. Verfahren zum Steuern einer Kompressoranlage (1), die eine Mehrzahl von Kompressoren (2), umfasst, wobei durch die Kompressoranlage (1) in einem Druckfluidsystem trotz ggf. auch schwankender Entnahme von Druckfluid aus dem Druckfluidsystem ein vorbestimmter Überdruck aufrechterhalten werden soll, wobei in festen oder variablen Zeitabständen Entscheidungen über Schalthandlungen zur Adaption des Systems an aktuelle Bedingungen getroffen werden, wobei

   - in einem Vorselektionsschritt (10), unter Berücksichtigung der aktuellen Bedingungen, Schaltalternativen (13) aus der Vielzahl von kombinatorisch zur Verfügung stehenden Schaltalternativen (13) ausgeschlossen werden,
   - in einem Hauptselektionsschritt (11) verbleibende Schaltalternativen (13) unter Heranziehung einer oder mehrerer Optimierungskriterien gegeneinander abgewogen werden und die unter den vorgegebenen Kriterien optimale Schaltalternative (13) ausgewählt wird und
   - in einem Steuerschritt (12) die ausgewählte Schaltalternative (13) zur Umsetzung in der Kompressoranlage (1) ausgegeben wird.

2. Verfahren nach Anspruch 1, **dadurch gekennzeichnet, dass** die Steuerung der Anlage (1) bei Erreichung eines möglicherweise variablen Zuschaltdruckes (102), Maßnahmen zur Erhöhung der Erzeugung von komprimiertem Druckfluid und bei Erreichung eines möglicherweise variablen Abschaltdruckes (103)Maßnahmen zur Reduzierung der Erzeugung von komprimiertem Druckfluid trifft.

3. Verfahren nach Anspruch 1 oder 2, wobei von der Steuerung der Anlage bei Erreichung eines möglicherweise variablen Zuschaltdruckes (102) Maßnahmen zur Erhöhung der Erzeugung von komprimiertem Druckfluid und bei Erreichung eines Abschaltdruckes (103) Maßnahmen zur Reduzierung der Erzeugung von komprimiertem Druckfluid getroffen werden, wobei der Abschaltdruck (103) variabel ist und in Abhängigkeit der aktuellen Konfiguration der Kompressoranlage (1) und/oder unter Berücksichtigung einer festgelegten Schalthandlung veränderlich ist.

4. Verfahren nach Anspruch 2 oder 3, **dadurch gekennzeichnet, dass** der optimale Abschaltdruck (103) bestimmt wird durch rechnerische Minimierung des Quotienten aus der Gesamtverlustarbeit in einem vordefinierten, eine Schaltalternative (13) betreffenden periodischen Zeitintervall und dem Zeitintervall selbst, wobei die Gesamtverlustarbeit die Summe der Verlustarbeit aller lastlaufender Kompressoren (2) in dem Zeitintervall, der Leerlaufverlustarbeit aller zuzuschaltenden Kompressoren (2) in dem Zeitintervall und der Schaltverlustarbeit aller zu- und abzuschaltender Kompressoren (2) in dem Zeitintervall umfasst.

5. Verfahren nach einem der Ansprüche 1 bis 4, **dadurch gekennzeichnet, dass** Schaltalternativen (13) zur Reduzierung der Erzeugung von Druckfluid nach anderen Optimierungskriterien bewertet werden als Schaltalternativen (13) zur Erhöhung der Erzeugung von Druckfluid.

6. Verfahren nach einem der Ansprüche 1 bis 5, **dadurch gekennzeichnet, dass** Abwägung und Auswahl von Schaltalternativen (13) zur Reduzierung der Erzeugung von Druckfluid unter Optimierungskriterien getroffen werden, die vorrangig oder ausschließlich den jeweiligen Gesamtenergieaufwand der in Betracht gezogenen verschiedenen Schaltalternativen (13) berücksichtigt.

7. Verfahren nach Anspruch 6, **dadurch gekennzeichnet, dass** bei der Berücksichtigung des Gesamtenergieaufwandes verschiedener Schaltalternativen (13) mindestens eingeht:

   - Energiebedarf der lastlaufenden Kompressoren und/oder
   - Leerlaufverluste der in Leerlauf bzw. Stillstand zu schaltenden Kompressoren und/oder
   - Leerlaufverluste der in Leerlauf befindlichen Kompressoren und/oder
   - Schaltverlustenergie der pro Schaltalternative (13) zu schaltenden Kompressoren.

8. Verfahren nach einem der Ansprüche 1 bis 7, **dadurch gekennzeichnet, dass** Beurteilung und Auswahl der Schaltalternative (13) in Echtzeit erfolgen.

9. Verfahren nach einem der Ansprüche 1 bis 8, **dadurch gekennzeichnet, dass** die Steuerung der Anlage (1) unter Berücksichtigung von Erfahrungsgrößen aus vergangenen Schalthandlungen (adaptive Steuerung) erfolgt.

10. Verfahren nach Anspruch 9, **dadurch gekennzeichnet, dass** die Erfahrungsgrößen umfassen:

    - Energiebedarfsgrad (Energiebedarf pro Fluidmenge) einzelner Kompressoren (2) oder bestimmter Kombinationen von Kompressoren (2) und/oder
    - Zuschaltreaktionszeiten der Kompressoren (2) und/oder
    - Verbrauchsverhalten der Druckfluidabnehmer und/oder
    - Größe des Druckspeichers und/oder
    - Druckkompensationsgrad der Kompressoren (2) oder bestimmter Kombinationen von Kompressoren (2).

11. Verfahren nach einem der Ansprüche 1 bis 8, **dadurch gekennzeichnet, dass** bei der Ermittlung der Schaltalternativen (13) als in Last zu schaltende Kompressoren (2) bevorzugt solche Kompressoren (2) oder Kombinationen von Kompressoren (2) ausgewählt werden, die günstige Werte von Erfahrungsgrößen für die Energiebedarfsgrad aufweisen.

12. Verfahren nach einem der Ansprüche 1 bis 9, **dadurch gekennzeichnet, dass** bei der Ermittlung der Schaltalternativen (13) als in Last zu schaltende Kompressoren (2) bevorzugt solche Kompressoren (2) ausgewählt werden, die sich in Leerlauf befinden und noch eine große Restleerlaufzeit aufweisen, und/oder für in Leerlauf bzw. Stillstand zu schaltende Kompressoren (2) bevorzugt solche Kompressoren (2) ausgewählt werden, die eine geringe Restleerlaufarbeit aufweisen.

13. Verfahren nach einem der Ansprüche 1 bis 10, **dadurch gekennzeichnet, dass** die Ermittlung von Schaltalternativen (13) und/oder die Ermittlung eines Abschaltdruckes (103) und/oder die Ermittlung eines Zuschaltdruckes (102) unter der Annahme einer konstanten Druckfluidabnahme erfolgen.

14. Verfahren nach einem der Ansprüche 1 bis 11, **dadurch gekennzeichnet, dass** bei Ermittlung mehrerer Schaltalternativen (13) als energetisch gleichwertig andere Kriterien bei der Auswahl zusätzlich Berücksichtigung finden, wie die Betriebsstundenzahl eines in Betracht gezogenen Kompressors (2).

15. Steuerungseinrichtung (4) für eine Kompressoranlage (1), die eine Mehrzahl von Kompressoren (2), umfasst, wobei durch die Kompressoranlage (1) in einem Druckfluidsystem trotz ggf. auch schwankender Entnahme von Druckfluid aus dem Druckfluidsystem ein vorbestimmter Überdruck aufrechterhalten werden soll, wobei in festen oder variablen Zeitabständen Entscheidungen über Schalthandlungen zur Adaption des Systems an aktuelle Bedingungen getroffen werden und **dadurch gekennzeichnet, dass** die Steuerungseinrichtung umfasst

    - eine Ausschlusseinrichtung (6), die, unter Berücksichtigung der aktuellen Bedingungen, Schaltalternativen (13) aus der Vielzahl von kombinatorisch zur Verfügung stehenden Schaltalternativen (13) ausschließt,

- eine Auswahleinrichtung (7), die verbleibende Schaltalternativen (13) unter Heranziehung einer oder mehrerer Optimierungskriterien gegeneinander abwägt und unter den vorgegebenen Kriterien eine optimale Schaltalternative (13) auswählt sowie
- eine Ausgabeeinrichtung (8), die zur Ausgabe der ausgewählten Schaltalternative (13) zur Umsetzung in der Kompressoranlage ausgebildet ist.

**Claims**

1. A method for controlling a compressor plant (1) comprising a plurality of compressors (2),
wherein a predefined excess pressure is to be maintained by the compressor plant (1) in a pressurized fluid system despite a possibly fluctuating withdrawal of pressurized fluid from the pressurized fluid system,
wherein decisions are met at fixed or variable time intervals as to switching operations for adapting the system to current conditions, wherein

   - in a pre-selecting step (10), switching alternatives (13) are excluded from a multiplicity of combinatorially available switching alternatives (13), while taking into account the current conditions,
   - in a main selection step, remaining switching alternatives (13) are weighed against one another under consideration of one or more optimization criteria, and the optimal switching alternative (13) under the predetermined criteria is selected, and
   - in a control step (12), the selected switching alternative (13) is output for implementation in the compressor plant (1).

2. The method according to claim 1, **characterized in that** the control of the plant (1) takes measures to increase the generation of compressed pressurized fluid upon reaching a possibly variable switch-on pressure (102) and to reduce the generation of compressed pressurized fluid upon reaching a possibly variable switch-off pressure (103).

3. The method according to claim 1 or 2,
wherein the control of the plant (1) takes measures to increase the generation of compressed pressurized fluid upon reaching a possibly variable switch-on pressure (102) and to reduce the generation of compressed pressurized fluid upon reaching a switch-off pressure (103), wherein the switch-off pressure (103) is variable and can be changed as a function of the current configuration of the compressor plant (1) and/or in consideration of a defined switching operation.

4. The method according to claim 2 or 3, **characterized in that** the optimal switch-off pressure (103) is determined by computationally minimizing the quotient of the total work loss in a predefined periodic time interval relating to one switching alternative (13) and the time interval itself, wherein the total work loss comprises the sum of work loss of all of the load running compressors (2) in said time interval, the no-load running work loss of all of the compressors (2) to be switched on in said time interval, and the switching work loss of all of the compressors (2) to be switched on and off in said time interval.

5. The method according to any one of claims 1 to 4, **characterized in that** the switching alternatives (13) for reducing the generation of pressurized fluid are evaluated according to optimization criteria other than those for the switching alternatives (13) for increasing the generation of pressurized fluid.

6. The method according to any one of claims 1 to 5, **characterized in that** decisions are met as to weighting and selecting of switching alternatives (13) for reducing the generation of pressurized fluid among optimization criteria which primarily or exclusively take into account the respective total energy expenditure of the different switching alternatives (13) under consideration.

7. The method according to claim 6, **characterized in that** the consideration of the total energy expenditure of different switching alternatives (13) includes at least:

   - the energy demand of the load running compressors and/or
   - no-load running losses of the compressors to be switched to no-load or stopped status and/or
   - no-load running losses of the no-load running compressors and/or
   - switching loss energy of the compressors to be switched per switching alternative (13).

**8.** The method according to any one of claims 1 to 7, **characterized in that** the evaluation and selection of the switching alternative (13) are performed in real-time.

**9.** The method according to any one of claims 1 to 8, **characterized in that** the control of the plant (1) is performed while taking into account empirical parameters from past switching operations (adaptive control).

**10.** The method according to claim 9, **characterized in that** the empirical parameters comprise:

- the level of energy demand (energy demand per amount of fluid) of individual compressors (2) or certain combinations of compressors (2) and/or
- switch-on response times of the compressors (2) and/or
- consumption behavior of the pressurized fluid consumers and/or
- the size of the pressure accumulator and/or
- the pressure compensation degree of the compressors (2) or certain combinations of compressors (2).

**11.** The method according to any one of claims 1 to 8, **characterized in that** such compressors (2) or combinations of compressors (2) are preferentially selected in the determination of the switching alternatives (13) as compressors (2) to be switched to load which have favorable values of empirical parameters for the level of energy demand.

**12.** The method according to any one of claims 1 to 9, **characterized in that** such compressors are preferentially selected in the determination of the switching alternatives (13) as compressors (2) to be switched to load which are at no-load and still have a long remaining no-load running time and/or are preferentially selected as the compressors (2) to be switched to no-load or stopped status which have a low remaining no-load work.

**13.** The method according to any one of claims 1 to 10, **characterized in that** the determination of switching alternatives (13) and/or the determination of a switch-off pressure (103) and/or the determination of a switch-on pressure (102) are performed assuming a constant pressurized fluid reduction.

**14.** The method according to any one of claims 1 to 11, **characterized in that** upon the determination of a plurality of switching alternatives (13) as being equivalent in terms of energy, further criteria are additionally taken into account such as the number of operating hours of a compressor (2) taken into consideration.

**15.** A control means (4) for a compressor plant (1) comprising a plurality of compressors (2),
wherein a predefined excess pressure is to be maintained by the compressor plant (1) in a pressurized fluid system despite a possibly fluctuating withdrawal of pressurized fluid from the pressurized fluid system,
wherein decisions are met at fixed or variable time intervals as to switching operations for adapting the system to current conditions, and **characterized in that** the control means comprises

- an excluding means (6) which excludes switching alternatives (13) from a multiplicity of switching alternatives (13) which are combinatorially, while taking into account the current conditions,
- a selecting means (7) which weighs remaining switching alternatives (13) against one another under consideration of one or more optimization criteria, and selects the optimal switching alternative (13), under the predetermined criteria, and
- an output means (8) configured to output the selected switching alternative (13) for implementation in the compressor plant.

**Revendications**

**1.** Procédé de commande d'une installation de compresseurs (1) qui comprend une pluralité de compresseurs (2), sachant qu'une surpression prédéterminée doit être maintenue par l'installation de compresseurs (1) dans un système de fluide sous pression malgré le soutirage éventuellement fluctuant de fluide sous pression à partir du système de fluide sous pression,
sachant que des décisions relatives à des opérations de commutation sont prises à intervalles de temps fixes ou variables pour adapter le système à des conditions actuelles, sachant que

- à une étape de présélection (10), compte tenu des conditions actuelles, des alternatives de commutation (13) sont exclues de la pluralité d'alternatives de commutation (13) disponibles de manière combinatoire,

- à une étape de sélection principale (11), des alternatives de commutation (13) restantes sont soupesées entre elles en se basant sur un ou plusieurs critères d'optimisation et l'alternative de commutation (13) optimale selon les critères spécifiés est sélectionnée et
- à une étape de commande (12), l'alternative de commutation (13) sélectionnée est sortie pour mise en oeuvre dans l'installation de compresseurs (1).

2. Procédé selon la revendication 1, **caractérisé en ce que** la commande de l'installation (1) prend, en cas d'atteinte d'une pression d'enclenchement (102) éventuellement variable, des mesures pour augmenter la production de fluide sous pression comprimé et, en cas d'atteinte d'une pression de déclenchement (103) éventuellement variable, des mesures pour réduire la production de fluide sous pression comprimé.

3. Procédé selon la revendication 1 ou 2,
sachant que des mesures sont prises par la commande de l'installation pour augmenter la production de fluide sous pression comprimé en cas d'atteinte d'une pression d'enclenchement (102) éventuellement variable et pour réduire la production de fluide sous pression comprimé en cas d'atteinte d'une pression de déclenchement (103), sachant que la pression de déclenchement (103) est variable et qu'elle est modifiable en fonction de la configuration actuelle de l'installation de compresseurs (1) et/ou compte tenu d'une opération de commutation définie.

4. Procédé selon la revendication 2 ou 3, **caractérisé en ce que** la pression de déclenchement (103) optimale est déterminée en minimisant par calcul le quotient résultant du travail de perte total dans un intervalle de temps périodique prédéfini relatif à une alternative de commutation (13) et de l'intervalle de temps lui-même, sachant que le travail de perte total comprend la somme du travail de perte de tous les compresseurs (2) fonctionnant en charge dans l'intervalle de temps, du travail de perte en marche à vide de tous les compresseurs (2) à enclencher dans l'intervalle de temps et du travail de perte de commutation de tous les compresseurs (2) à enclencher et à déclencher dans l'intervalle de temps.

5. Procédé selon l'une des revendications 1 à 4, **caractérisé en ce que** des alternatives de commutation (13) pour réduire la production de fluide sous pression sont évaluées selon d'autres critères d'optimisation que des alternatives de commutation (13) pour augmenter la production de fluide sous pression.

6. Procédé selon l'une des revendications 1 à 5, **caractérisé en ce que** le soupèsement et la sélection d'alternatives de commutation (13) pour réduire la production de fluide sous pression sont effectués selon des critères d'optimisation qui prennent en compte prioritairement ou exclusivement la dépense d'énergie totale respective des diverses alternatives de commutation (13) envisagées.

7. Procédé selon la revendication 6, **caractérisé en ce que**, dans la prise en compte de la dépense d'énergie totale de diverses alternatives de commutation (13), sont au moins inclus :

- les besoins en énergie des compresseurs fonctionnant en charge et/ou
- les pertes en marche à vide des compresseurs à commuter en marche à vide ou à l'arrêt et/ou
- les pertes en marche à vide des compresseurs qui se trouvent en marche à vide et/ou
- l'énergie de perte de commutation des compresseurs à commuter par alternative de commutation (13).

8. Procédé selon l'une des revendications 1 à 7, **caractérisé en ce que** l'évaluation et la sélection des alternatives de commutation (13) s'effectuent en temps réel.

9. Procédé selon l'une des revendications 1 à 8, **caractérisé en ce que** la commande de l'installation (1) s'effectue compte tenu de grandeurs d'expérience issues d'opérations de commutation passées (commande adaptative).

10. Procédé selon la revendication 9, **caractérisé en ce que** les grandeurs d'expérience comprennent :

- un degré de besoins en énergie (besoins en énergie par quantité de fluide) de compresseurs (2) individuels ou de certaines combinaisons de compresseurs (2) et/ou
- des temps de réaction d'enclenchement des compresseurs (2) et/ou
- des comportements de consommation des consommateurs de fluide sous pression et/ou
- une grandeur de l'accumulateur de pression et/ou
- un degré de compensation de pression des compresseurs (2) ou de certaines combinaisons de compresseurs (2).

**11.** Procédé selon l'une des revendications 1 à 8, **caractérisé en ce que**, lors de la détermination des alternatives de commutation (13), de préférence les compresseurs (2) ou combinaisons de compresseurs (2) qui présentent des valeurs favorables de grandeurs d'expérience pour le degré de besoins en énergie sont sélectionnés comme compresseurs (2) à commuter en charge.

**12.** Procédé selon l'une des revendications 1 à 9, **caractérisé en ce que**, lors de la détermination des alternatives de commutation (13), de préférence les compresseurs (2) qui se trouvent en marche à vide et présentent encore un temps de marche à vide résiduel élevé, et/ou pour des compresseurs (2) à commuter en marche à vide ou à l'arrêt, de préférence les compresseurs (2) qui présentent un travail de marche à vide résiduel peu élevé, sont sélectionnés comme compresseurs (2) à commuter en charge.

**13.** Procédé selon l'une des revendications 1 à 10, **caractérisé en ce que** la détermination d'alternatives de commutation (13) et/ou la détermination d'une pression de déclenchement (103) et/ou la détermination d'une pression d'enclenchement (102) s'effectuent dans l'hypothèse d'un soutirage constant de fluide sous pression.

**14.** Procédé selon l'une des revendications 1 à 11, **caractérisé en ce que**, lors de la détermination de plusieurs alternatives de commutation (13) comme étant équivalents sur le plan énergétique, d'autres critères sont en outre pris en compte lors de la sélection, comme le nombre d'heures de fonctionnement d'un compresseur (2) envisagé.

**15.** Dispositif de commande (4) pour une installation de compresseurs (1) qui comprend une pluralité de compresseurs (2),
sachant qu'une surpression prédéterminée doit être maintenue par l'installation de compresseurs (1) dans un système de fluide sous pression malgré le soutirage éventuellement fluctuant de fluide sous pression à partir du système de fluide sous pression,
sachant que des décisions relatives à des opérations de commutation sont prises à intervalles de temps fixes ou variables pour l'adaptation du système à des conditions actuelles, et **caractérisé en ce que** le dispositif de commande comprend

- un dispositif d'exclusion (6) qui, compte tenu des conditions actuelles, exclut des alternatives de commutation (13) de la pluralité d'alternatives de commutation (13) disponibles de manière combinatoire,
- un dispositif de sélection (7) qui soupèse entre elles les alternatives de commutation (13) restantes en se basant sur un ou plusieurs critères d'optimisation et sélectionne une alternative de commutation (13) optimale selon les critères spécifiés ainsi que
- un dispositif de sortie (8) qui est configuré pour sortir l'alternative de commutation (13) sélectionnée pour mise en oeuvre dans l'installation de compresseurs.

**Fig. 1**

**Fig. 2**

**Fig. 3**

Kommunikationsbus

Druck

$T_{ab}$

$P_{Max}$

$T_{zu}$ $|dp/dt|_{mittel1}$ $|dp/dt|_{mittel2}$ $T_{zu}$

$P_{Min}$

$T_{Schalt}$

Zeit

**Fig. 4**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03095841 A1
- EP O431287 A1